(19) Europäisches Patentamt / European Patent Office / Office européen des brevets

(11) **EP 4 159 698 A1**

(12) **EUROPEAN PATENT APPLICATION**
published in accordance with Art. 153(4) EPC


(43) Date of publication:
**05.04.2023 Bulletin 2023/14**

(21) Application number: **21813420.3**

(22) Date of filing: **25.05.2021**

(51) International Patent Classification (IPC):
***C03C 27/12*** ***(2006.01)*** ***B60J 1/00*** ***(2006.01)***

(52) Cooperative Patent Classification (CPC):
**B32B 17/00; B60J 1/00**

(86) International application number:
**PCT/JP2021/019848**

(87) International publication number:
**WO 2021/241592 (02.12.2021 Gazette 2021/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.05.2020 JP 2020092392**



(71) Applicant: **SEKISUI CHEMICAL CO., LTD.**
**Osaka-shi**
**Osaka**
**530-8565 (JP)**

(72) Inventors:
- **MINAMI, Kuon**
  **Kouka-shi, Shiga 528-8585 (JP)**
- **NISHINO, Hiromitsu**
  **Kouka-shi, Shiga 528-8585 (JP)**
- **OKAJIMA, Moyuru**
  **Kouka-shi, Shiga 528-8585 (JP)**
- **TSUNODA, Ryuta**
  **Kouka-shi, Shiga 528-8585 (JP)**

(74) Representative: **Ter Meer Steinmeister & Partner**
**Patentanwälte mbB**
**Nymphenburger Straße 4**
**80335 München (DE)**


(54) **INTERLAYER FILM FOR LAMINATED GLASS, AND LAMINATED GLASS**


(57) Provided is an interlayer film for laminated glass capable of suppressing generation of a gap in the interlayer film in end parts of the laminated glass although the interlayer film in which an increment in thickness is not constant from one end to the other end is used. An interlayer film for laminated glass according to the present invention contains a light stabilizer, and an oxidation inhibitor, and has one end, and the other end being at an opposite side of the one end and having a larger thickness than the one end, and the interlayer film for laminated glass has an increment not constant in thickness from the one end to the other end.


[FIG. 1.]

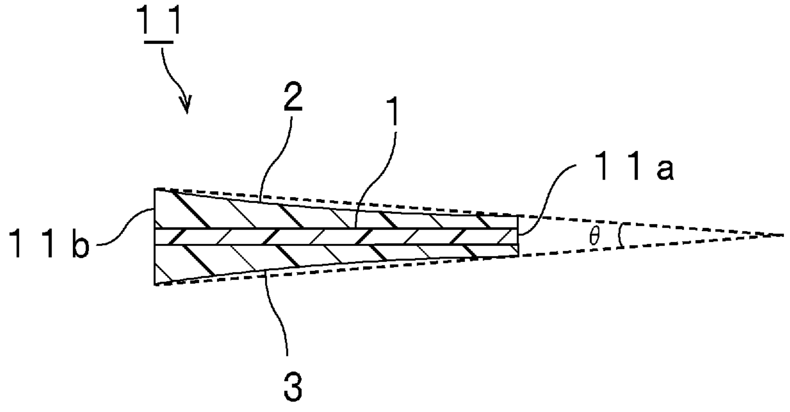


EP 4 159 698 A1

## Description

### TECHNICAL FIELD

The present invention relates to an interlayer film for laminated glass that is used for obtaining laminated glass. Moreover, the present invention relates to a laminated glass prepared with the interlayer film for laminated glass.

### BACKGROUND ART

Since laminated glass generates only a small amount of scattering glass fragments even when subjected to external impact and broken, laminated glass is excellent in safety. As such, laminated glass is widely used for automobiles, railway vehicles, aircraft, ships, buildings and the like. Laminated glass is produced by sandwiching an interlayer film between a pair of glass plates.

As an interlayer film, an interlayer film having a rectangular sectional shape in the thickness direction, and an interlayer film having a wedge-like sectional shape in the thickness direction, and so on are known. As a wedge-like interlayer film, interlayer films in which the increment in thickness from one end to the other end is constant as shown in Figs. 1, 3, 5 and so on of Patent Document 1, and interlayer films in which the increment in thickness from one end to the other end is not constant as shown in Figs. 2, 4, 6, 7 and so on of Patent Document 1 are known.

### Related Art Document

### Patent Document

Patent Document 1: WO2017/104632A1

### SUMMARY OF THE INVENTION

### PROBLEMS TO BE SOLVED BY THE INVENTION

Laminated glass is generally produced by pressure bonding an interlayer film and lamination glass members.

When an interlayer film having a rectangular sectional shape in the thickness direction or an interlayer film in which the increment in thickness from one end to the other end is constant is used, lamination glass members do not deform in pressure bonding the interlayer film and the lamination glass members.

On the other hand, when an interlayer film in which the increment in thickness from one end to the other end is not constant is used, lamination glass members bend along the contour of the interlayer film, and deform. Therefore, in the obtained laminated glass, the force of restoring the original shape of lamination glass members is generated in end parts, and in association with this, the force of being drawn outwardly in the thickness direction is generated also in end parts of the interlayer film adhered to the lamination glass members.

Therefore, in a laminated glass obtained with an interlayer film in which the increment in thickness from one end to the other end is not constant, the interlayer film is likely to deteriorate in end parts of the laminated glass. Also, when light and heat and the like are applied to the laminated glass, the interlayer film is more likely to deteriorate in end parts of the laminated glass. Deterioration of the interlayer film in end parts of the laminated glass can cause generation of a gap in the interlayer film. The gap is a recess portion in which the interlayer film is lost in end parts of the laminated glass.

It is an object of the present invention to provide an interlayer film for laminated glass capable of suppressing generation of a gap in the interlayer film in end parts of the laminated glass although the interlayer film in which the increment in thickness is not constant from one end to the other end is used. It is also an object of the present invention to provide a laminated glass prepared with the interlayer film for laminated glass.

### MEANS FOR SOLVING THE PROBLEMS

According to a broad aspect of the present invention, there is provided an interlayer film for laminated glass (hereinafter, also described as "interlayer film") containing a light stabilizer, and an oxidation inhibitor, the interlayer film for laminated glass having one end, and the other end being at an opposite side of the one end and having a thickness larger than a thickness of the one end, and the interlayer film for laminated glass having an increment not constant in thickness from the one end to the other end.

In a specific aspect of the interlayer film according to the present invention, the light stabilizer is a hindered amine light stabilizer, and the hindered amine light stabilizer is a hindered amine light stabilizer in which a carbon atom or an oxygen atom of an alkoxy group is bonded to a nitrogen atom of a piperidine structure.

In a specific aspect of the interlayer film according to the present invention, the oxidation inhibitor is a phenolic oxidation inhibitor.

In a specific aspect of the interlayer film according to the present invention, the oxidation inhibitor has a molecular weight of 220 or more.

In a specific aspect of the interlayer film according to the present invention, a content of the light stabilizer in 100% by weight of a layer containing the light stabilizer is 0.01% by weight or more and 0.5% by weight or less.

In a specific aspect of the interlayer film according to the present invention, a content of the oxidation inhibitor in 100% by weight of a layer containing the oxidation inhibitor is 0.1% by weight or more and 2% by weight or less.

In a specific aspect of the interlayer film according to the present invention, the interlayer film has a distribution in a content on a weight basis of the light stabilizer in the direction connecting the one end and the other end such that the content on a weight basis of the light stabilizer is larger on the other end side of the direction connecting the one end and the other end, and has a distribution in a content on a weight basis of the oxidation inhibitor in the direction connecting the one end and the other end such that the content on a weight basis of the oxidation inhibitor is larger on the other end side of the direction connecting the one end and the other end.

In a specific aspect of the interlayer film according to the present invention, the interlayer film has at least one of the following configuration (1) to configuration (3).

Configuration (1): the interlayer film has a region where a thickness increases from the one end side to the other end side, and has a portion where an increment in thickness differs from the one end side to the other end side in the region where the thickness increases.

Configuration (2): the interlayer film has a portion where a wedge angle differs from the one end side to the other end side in a region having a wedge-like sectional shape in a thickness direction.

Configuration (3): the interlayer film has a portion having a rectangular sectional shape in the thickness direction, and a portion having a wedge-like sectional shape in the thickness direction.

In a specific aspect of the interlayer film according to the present invention, the interlayer film includes a first layer and a second layer arranged on a first surface side of the first layer.

In a specific aspect of the interlayer film according to the present invention, the first layer contains a polyvinyl acetal resin and a plasticizer, and the second layer contains a polyvinyl acetal resin and a plasticizer.

In a specific aspect of the interlayer film according to the present invention, a content of hydroxyl group of the polyvinyl acetal resin in the first layer is lower than a content of hydroxyl group of the polyvinyl acetal resin in the second layer.

In a specific aspect of the interlayer film according to the present invention, a content of the plasticizer in the first layer per 100 parts by weight of the polyvinyl acetal resin in the first layer is larger than a content of the plasticizer in the second layer per 100 parts by weight of the polyvinyl acetal resin in the second layer.

In a specific aspect of the interlayer film according to the present invention, the first layer contains the light stabilizer and the oxidation inhibitor.

According to a broad aspect of the present invention, there is provided a laminated glass including a first lamination glass member, a second lamination glass member, and the above-described interlayer film for laminated glass, the interlayer film for laminated glass being arranged between the first lamination glass member and the second lamination glass member.

## EFFECT OF THE INVENTION

The interlayer film according to the present invention contains a light stabilizer, and an oxidation inhibitor, and has one end, and the other end being at an opposite side of the one end and having a larger thickness than the one end, and the interlayer film has an increment not constant in thickness from the one end to the other end. In the interlayer film according to the present invention, since the above configuration is provided, it is possible to suppress generation of a gap in the interlayer film in end parts of the laminated glass although the interlayer film in which the increment in thickness is not constant from one end to the other end is used.

## BRIEF DESCRIPTION OF DRAWINGS

[Fig. 1] Fig. 1 is a sectional view schematically showing an interlayer film for laminated glass in accordance with a first embodiment of the present invention.

[Fig. 2] Fig. 2 is a sectional view schematically showing an interlayer film for laminated glass in accordance with a second embodiment of the present invention.

[Fig. 3] Fig. 3 is a sectional view schematically showing an interlayer film for laminated glass in accordance with a

third embodiment of the present invention.

[Fig. 4] Fig. 4 is a sectional view schematically showing an interlayer film for laminated glass in accordance with a fourth embodiment of the present invention.

[Fig. 5] Fig. 5 is a sectional view schematically showing an interlayer film for laminated glass in accordance with a fifth embodiment of the present invention.

[Fig. 6] Fig. 6 is a sectional view schematically showing an interlayer film for laminated glass in accordance with a sixth embodiment of the present invention.

[Fig. 7] Fig. 7 is a sectional view schematically showing an interlayer film for laminated glass in accordance with a seventh embodiment of the present invention.

[Fig. 8] Fig. 8 is a sectional view schematically showing an interlayer film for laminated glass in accordance with an eighth embodiment of the present invention.

[Fig. 9] Fig. 9 is a sectional view schematically showing an interlayer film for laminated glass in accordance with a ninth embodiment of the present invention.

[Fig. 10] Fig. 10 is a sectional view schematically showing an interlayer film for laminated glass in accordance with a tenth embodiment of the present invention.

[Fig. 11] Fig. 11 is a sectional view schematically showing an example of laminated glass prepared with the interlayer film for laminated glass shown in Fig. 1.

[Fig. 12] Fig. 12 is a view schematically showing an example of an interlayer film for laminated glass that is not included in the interlayer film for laminated glass according to the present invention.

[Fig. 13] Fig. 13 is a view for illustrating a preparation method of a test sample for foaming test in a foaming test.

## MODES FOR CARRYING OUT THE INVENTION

Hereinafter, the present invention will be described in detail.

(Interlayer film for laminated glass)

The interlayer film for laminated glass (in the present specification, sometimes abbreviated as "interlayer film") according to the present invention is used for laminated glass.

The interlayer film according to the present invention has a one-layer structure or a two or more-layer structure. The interlayer film according to the present invention may have a one-layer structure and may have a two or more-layer structure. The interlayer film according to the present invention may have a two-layer structure, may have a two or more-layer structure, may have a three-layer structure, and may have a three or more-layer structure. The interlayer film according to the present invention may include only a first layer. The interlayer film according to the present invention may include, a first layer, and a second layer arranged on a first surface side of the first layer. The interlayer film according to the present invention may include a first layer, a second layer arranged on a first surface side of the first layer, and a third layer arranged on a second surface side of the first layer. The interlayer film according to the present invention may be a single-layered interlayer film and may be a multi-layered interlayer film. The structure of the interlayer film according to the present invention may partially vary. For example, the interlayer film according to the present invention may have a part having a one-layer structure, and a part having a multi-layer structure.

The interlayer film according to the present invention contains a light stabilizer, and an oxidation inhibitor.

The interlayer film according to the present invention has one end, and the other end being at an opposite side of the one end and having a larger thickness than a thickness of the one end. The one end and the other end are both end parts facing each other in the interlayer film. In the interlayer film according to the present invention, a thickness of the other end is larger than a thickness of the one end.

In the interlayer film according to the present invention, the interlayer film has an increment not constant in thickness from the one end to the other end. The interlayer film according to the present invention is different from the interlayer film in which an increment in thickness from the one end to the other end is constant. The interlayer film according to the present invention is an interlayer film containing a light stabilizer, and an oxidation inhibitor, and having one end, and the other end being at an opposite side of the one end and having a larger thickness than the one end (excluding an interlayer film in which an increment in thickness from the one end to the other end is constant).

In the interlayer film according to the present invention, since the above configuration is provided, it is possible to suppress generation of a gap in the interlayer film in end parts of the laminated glass although the interlayer film in which the increment in thickness is not constant from one end to the other end is used. Since the interlayer film according to the present invention contains the light stabilizer and the oxidation inhibitor, it is possible to effectively suppress deterioration of the interlayer film, in particular, deterioration in end parts of the interlayer film, and thus it is possible to suppress generation of a gap.

In the interlayer film according to the present invention, there exists a portion where an increment in thickness

from the one end to the other end varies. Examples of the interlayer film in which an increment in thickness from one end to the other end is not constant include an interlayer film having at least one configuration of the following configuration (1) to configuration (3). It is preferred that the interlayer film have at least one configuration of the following configuration (1) to configuration (3) .

Configuration (1): the interlayer film has a region where the thickness increases from the one end side to the other end side, and has a portion where an increment in thickness differs from the one end side to the other end side in the region where the thickness increases.

Configuration (2): the interlayer film has a portion where a wedge angle differs from the one end side to the other end side in a region having a wedge-like sectional shape in a thickness direction.

Configuration (3): the interlayer film has a portion having a rectangular sectional shape in the thickness direction, and a portion having a wedge-like sectional shape in the thickness direction.

Examples of the interlayer film in which an increment in thickness from one end to the other end is not constant include an interlayer film having at least one configuration of the following configuration (i) to configuration (vii). Examples of the configuration (1) include the following configuration (i), the following configuration (ii) and the following configuration (iii). Examples of the configuration (2) include the following configuration (iv), the following configuration (v) and the following configuration (vi). It is preferred that the interlayer film have at least one configuration of the following configuration (i) to configuration (vii).

Configuration (i): the interlayer film has a region where the thickness increases from the one end side to the other end side, and has a portion where an increment in thickness increases from the one end side to the other end side in the region where the thickness increases.

Configuration (ii): the interlayer film has a region where the thickness increases from the one end side to the other end side, and has a portion where an increment in thickness decreases from the one end side to the other end side in the region where the thickness increases.

Configuration (iii): the interlayer film has a region where the thickness increases from the one end side to the other end side, and has a first portion where an increment in thickness from the one end side to the other end side is constant, and a second portion where an increment in thickness from the one end side to the other end side is constant in the region where the thickness increases. The increment in thickness in the first portion and the increment in thickness in the second portion are different from each other.

Configuration (iv): the interlayer film has a portion where a wedge angle increases from the one end side to the other end side in a region having a wedge-like sectional shape in the thickness direction.

Configuration (v): the interlayer film has a portion where a wedge angle decreases from the one end side to the other end side in a region having a wedge-like sectional shape in the thickness direction.

Configuration (vi): the interlayer film has a first region having a wedge-like sectional shape in the thickness direction, and a second region having a wedge-like sectional shape in the thickness direction, and a wedge angle in the first region and a wedge angle in the second region are different from each other.

Configuration (vii): the interlayer film has a portion having a rectangular sectional shape in the thickness direction, and a portion having a wedge-like sectional shape in the thickness direction.

The interlayer film may have only one configuration, may have two configurations, may have two or more configurations, may have three configurations, and may have three or more configurations of the configuration (i) to configuration (vii). The interlayer film may at least have the configuration (i), may at least have the configuration (ii), and may at least have the configuration (iii). The interlayer film may at least have the configuration (iv), may at least have the configuration (v), and may at least have the configuration (vi). The interlayer film may at least have the configuration (vii). The interlayer film may at least have the configuration (i) and the configuration (ii), and may at least have the configuration (iv) and the configuration (v) . The interlayer film may at least have the configuration (i) and the configuration (iv), may at least have the configuration (ii) and the configuration (v), and may at least have the configuration (iii) and the configuration (vi). The interlayer film may at least have the configuration (i) and the configuration (vii), may at least have the configuration (ii) and the configuration (vii), and may at least have the configuration (iii) and the configuration (vii). The interlayer film may at least have the configuration (iv) and the configuration (vii), may at least have the configuration (v) and the configuration (vii), and may at least have the configuration (vi) and the configuration (vii).

Also, the interlayer film may be an interlayer film including a configuration other than the configuration (i) to the configuration (vii).

Hereinafter, specific embodiments of the present invention will be described with reference to the drawings.

Fig. 1 is a sectional view schematically showing an interlayer film for laminated glass in accordance with a first embodiment of the present invention. In Fig. 1, a section in the thickness direction of an interlayer film 11 is shown. The size and dimension of the interlayer film in Fig. 1 and later described drawings are appropriately changed from the actual size and shape for convenience of illustration.

The interlayer film 11 includes a first layer 1 (intermediate layer), a second layer 2 (surface layer), and a third layer 3 (surface layer). The second layer 2 is arranged on a first surface side of the first layer 1 to be layered thereon.

The third layer 3 is arranged on a second surface side opposite to the first surface of the first layer 1 to be layered thereon. The first layer 1 is arranged between the second layer 2 and the third layer 3 to be sandwiched therebetween. The interlayer film 11 is used for obtaining laminated glass. The interlayer film 11 is an interlayer film for laminated glass. The interlayer film 11 is a multilayer interlayer film. The interlayer film 11 has a three-layer structure.

The interlayer film 11 has one end 11a and the other end 11b being at an opposite side of the one end 11a. The one end 11a and the other end 11b are end parts of both sides facing each other. The sectional shape in the thickness direction of each of the second layer 2 and the third layer 3 is a wedge-like shape. The sectional shape in the thickness direction of the first layer 1 is a rectangular shape. The thicknesses of the second layer 2 and the third layer 3 are larger on the other end 11b side than on the one end 11a side. Accordingly, the thickness of the other end 11b of the interlayer film 11 is larger than the thickness of the one end 11a thereof. Accordingly, the interlayer film 11 has a region being thin in thickness and a region being thick in thickness.

The interlayer film 11 has a region where the thickness increases from the one end 11a side to the other end 11b side. The interlayer film 11 has a portion where the increment in thickness increases from the one end 11a side to the other end 11b side in the region where the thickness increases. The interlayer film 11 has a region having a wedge-like sectional shape in the thickness direction. The interlayer film 11 has a portion where the wedge angle increases from the one end 11a side to the other end 11b side in the region having a wedge-like sectional shape in the thickness direction.

The interlayer film may be a single-layered interlayer film with the shape shown in Fig. 1 having a one-layer structure, may be an interlayer film with the shape shown in Fig. 1 having a two-layer structure, and may be an interlayer film with the shape shown in Fig. 1 having a four or more-layer structure. The interlayer film may be an interlayer film with the shape shown in Fig. 1 having a wedge-like sectional shape in the thickness direction of the first layer.

Fig. 2 is a sectional view schematically showing an interlayer film for laminated glass in accordance with a second embodiment of the present invention. In Fig. 2, a section in the thickness direction of an interlayer film 11A is shown.

The interlayer film 11A includes a first layer 1A (intermediate layer), a second layer 2A (surface layer), and a third layer 3A (surface layer). The second layer 2A is arranged on a first surface side of the first layer 1A to be layered thereon. The third layer 3A is arranged on a second surface side opposite to the first surface of the first layer 1A to be layered thereon. The first layer 1A is arranged between the second layer 2A and the third layer 3A to be sandwiched therebetween. The interlayer film 11A is a multilayer interlayer film. The interlayer film 11A has a three-layer structure.

The interlayer film 11A has one end 11a and the other end 11b being at an opposite side of the one end 11a. The one end 11a and the other end 11b are end parts of both sides facing each other. The sectional shape in the thickness direction of the second layer 2A is a wedge-like shape. The sectional shapes in the thickness direction of the first layer 1A and the third layer 3A are rectangular shapes. The thickness of the second layer 2A is larger on the other end 11b side than on the one end 11a side. Accordingly, the thickness of the other end 11b of the interlayer film 11A is larger than the thickness of the one end 11a thereof. Accordingly, the interlayer film 11A has a region being thin in thickness and a region being thick in thickness.

The interlayer film 11A has a region where the thickness increases from the one end 11a side to the other end 11b side. The interlayer film 11A has a portion where the increment in thickness increases from the one end 11a side to the other end 11b side in the region where the thickness increases. The interlayer film 11A has a region having a wedge-like sectional shape in the thickness direction. The interlayer film 11A has a portion where the wedge angle increases from the one end 11a side to the other end 11b side in the region having a wedge-like sectional shape in the thickness direction.

The interlayer film may be a single-layered interlayer film with the shape shown in Fig. 2 having a one-layer structure, may be an interlayer film with the shape shown in Fig. 2 having a two-layer structure, and may be an interlayer film with the shape shown in Fig. 2 having a four or more-layer structure.

Fig. 3 is a sectional view schematically showing an interlayer film for laminated glass in accordance with a third embodiment of the present invention. In Fig. 3, a section in the thickness direction of an interlayer film 11B is shown.

The interlayer film 11B includes a first layer 1B. The interlayer film 11B has a one-layer structure composed only of the first layer 1B and is a single-layered interlayer film.

The interlayer film 11B has one end 11a and the other end 11b being at an opposite side of the one end 11a. The one end 11a and the other end 11b are end parts of both sides facing each other. The thickness of the other end 11b of the interlayer film 11B is larger than the thickness of the one end 11a thereof. Accordingly, the interlayer film 11B has a region being thin in thickness and a region being thick in thickness.

The interlayer film 11B has a region where the thickness increases from the one end 11a side to the other end 11b side. The interlayer film 11B has a portion where the increment in thickness increases from the one end 11a side to the other end 11b side in the region where the thickness increases. The interlayer film 11B has a region having a wedge-like sectional shape in the thickness direction. The interlayer film 11B has a portion where the wedge angle increases from the one end 11a side to the other end 11b side in the region having a wedge-like sectional shape in the thickness direction.

The interlayer film 11B and the first layer 1B have portions 11Ba, 1Ba having a rectangular sectional shape in the thickness direction, and portions 11Bb, 1Bb having a wedge-like sectional shape in the thickness direction.

The interlayer film may be an interlayer film with the shape shown in Fig. 3 having a two-layer structure, may be an interlayer film with the shape shown in Fig. 3 having a three-layer structure, and may be an interlayer film with the shape shown in Fig. 3 having a four or more-layer structure.

Fig. 4 is a sectional view schematically showing an interlayer film for laminated glass in accordance with a fourth embodiment of the present invention. In Fig. 4, a section in the thickness direction of an interlayer film 11C is shown.

The interlayer film 11C includes a first layer 1C (intermediate layer), a second layer 2C (surface layer), and a third layer 3C (surface layer). The interlayer film 11 and the interlayer film 11C are different from each other in the increment in thickness in the region where the thickness increases.

The interlayer film 11C has a region where the thickness increases from the one end 11a side to the other end 11b side. The interlayer film 11C has a portion where the increment in thickness decreases from the one end 11a side to the other end 11b side in the region where the thickness increases. The interlayer film 11C has a region having a wedge-like sectional shape in the thickness direction. The interlayer film 11C has a portion where the wedge angle decreases from the one end 11a side to the other end 11b side in the region having a wedge-like sectional shape in the thickness direction.

The interlayer film may be a single-layered interlayer film with the shape shown in Fig. 4 having a one-layer structure, may be an interlayer film with the shape shown in Fig. 4 having a two-layer structure, and may be an interlayer film with the shape shown in Fig. 4 having a four or more-layer structure. The interlayer film may be an interlayer film with the shape shown in Fig. 4 having a wedge-like sectional shape in the thickness direction of the first layer.

Fig. 5 is a sectional view schematically showing an interlayer film for laminated glass in accordance with a fifth embodiment of the present invention. In Fig. 5, a section in the thickness direction of an interlayer film 11D is shown.

The interlayer film 11D includes a first layer 1D (intermediate layer), a second layer 2D (surface layer), and a third layer 3D (surface layer). The interlayer film 11A and the interlayer film 11D are different from each other in the increment in thickness in the region where the thickness increases.

The interlayer film 11D has a region where the thickness increases from the one end 11a side to the other end 11b side. The interlayer film 11D has a portion where the increment in thickness decreases from the one end 11a side to the other end 11b side in the region where the thickness increases. The interlayer film 11D has a region having a wedge-like sectional shape in the thickness direction. The interlayer film 11D has a portion where the wedge angle decreases from the one end 11a side to the other end 11b side in the region having a wedge-like sectional shape in the thickness direction.

The interlayer film may be a single-layered interlayer film with the shape shown in Fig. 5 having a one-layer structure, may be an interlayer film with the shape shown in Fig. 5 having a two-layer structure, and may be an interlayer film with the shape shown in Fig. 5 having a four or more-layer structure.

Fig. 6 is a sectional view schematically showing an interlayer film for laminated glass in accordance with a sixth embodiment of the present invention. In Fig. 6, a section in the thickness direction of an interlayer film 11E is shown.

The interlayer film 11E includes a first layer 1E. The interlayer film 11B and the interlayer film 11E are different from each other in the increment in thickness in the region where the thickness increases.

The interlayer film 11E has a region where the thickness increases from the one end 11a side to the other end 11b side. The interlayer film 11E has a portion where the increment in thickness decreases from the one end 11a side to the other end 11b side in the region where the thickness increases. The interlayer film 11E has a region having a wedge-like sectional shape in the thickness direction. The interlayer film 11E has a portion where the wedge angle decreases from the one end 11a side to the other end 11b side in the region having a wedge-like sectional shape in the thickness direction.

The interlayer film 11E and the first layer 1E have portions 11Ea, 1Ea having a rectangular sectional shape in the thickness direction, and portions 11Eb, 1Eb having a wedge-like sectional shape in the thickness direction.

The interlayer film may be an interlayer film with the shape shown in Fig. 6 having a two-layer structure, may be an interlayer film with the shape shown in Fig. 6 having a three-layer structure, and may be an interlayer film with the shape shown in Fig. 6 having a four or more-layer structure.

Fig. 7 is a sectional view schematically showing an interlayer film for laminated glass in accordance with a seventh embodiment of the present invention. In Fig. 7, a section in the thickness direction of an interlayer film 11F is shown.

The interlayer film 11F includes a first layer 1F. The interlayer film 11B and the interlayer film 11F are different from each other in the increment in thickness in the region where the thickness increases.

The interlayer film 11F has a region where the thickness increases from the one end 11a side to the other end 11b side. In the interlayer film 11F, the increment in thickness is constant from the one end 11a side to the other end 11b side in the region where the thickness increases.

The interlayer film 11F and the first layer 1F have portions 11Fa, 1Fa having a rectangular sectional shape in

the thickness direction, and portions 11Fb, 1Fb having a wedge-like sectional shape in the thickness direction. Since the increment in thickness differs between the portions 11Fa, 1Fa having a rectangular sectional shape in the thickness direction, and the portions 11Fb, 1Fb having a wedge-like sectional shape in the thickness direction, the increment in thickness from the one end 11a to the other end 11b is not constant in the interlayer film 11F.

The interlayer film may be an interlayer film with the shape shown in Fig. 7 having a two-layer structure, may be an interlayer film with the shape shown in Fig. 7 having a three-layer structure, and may be an interlayer film with the shape shown in Fig. 7 having a four or more-layer structure.

Fig. 8 is a sectional view schematically showing an interlayer film for laminated glass in accordance with an eighth embodiment of the present invention. In Fig. 8, a section in the thickness direction of an interlayer film 11G is shown.

The interlayer film 11G includes a first layer 1G (intermediate layer), a second layer 2G (surface layer), and a third layer 3G (surface layer). The interlayer film 11 and the interlayer film 11G are different from each other in the increment in thickness in the region where the thickness increases.

The interlayer film 11G has a region where the thickness increases from the one end 11a side to the other end 11b side. The interlayer film 11G has a portion where the increment in thickness increases from the one end 11a side to the other end 11b side and a portion where the increment in thickness decreases in the region where the thickness increases. The interlayer film 11G has a region having a wedge-like sectional shape in the thickness direction. The interlayer film 11G has a portion where the wedge angle increases from the one end 11a side to the other end 11b side and a portion where the wedge angle decreases in the region having a wedge-like sectional shape in the thickness direction.

The interlayer film may be a single-layered interlayer film with the shape shown in Fig. 8 having a one-layer structure, may be an interlayer film with the shape shown in Fig. 8 having a two-layer structure, and may be an interlayer film with the shape shown in Fig. 8 having a four or more-layer structure. The interlayer film may be an interlayer film with the shape shown in Fig. 8 having a wedge-like sectional shape in the thickness direction of the first layer.

Fig. 9 is a sectional view schematically showing an interlayer film for laminated glass in accordance with a ninth embodiment of the present invention. In Fig. 9, a section in the thickness direction of an interlayer film 11H is shown.

The interlayer film 11H includes a first layer 1H (intermediate layer), a second layer 2H (surface layer), and a third layer 3H (surface layer).

The interlayer film 11H has one end 11a and the other end 11b being at an opposite side of the one end 11a. The one end 11a and the other end 11b are end parts of both sides facing each other. The sectional shape in the thickness direction of each of the second layer 2H and the third layer 3H is a wedge-like shape. The sectional shape in the thickness direction of the first layer 1H is a rectangular shape. The thicknesses of the second layer 2H and the third layer 3H are larger on the other end 11b side than on the one end 11a side. Accordingly, the thickness of the other end 11b of the interlayer film 11H is larger than the thickness of the one end 11a thereof. Accordingly, the interlayer film 11H has a region being thin in thickness and a region being thick in thickness.

The interlayer film 11H has a region where the thickness increases from the one end 11a side to the other end 11b side. The interlayer film 11H has a first portion 11Ha where the increment in thickness is constant, and a second portion 11Hb where the increment in thickness is constant, in the region where the thickness increases. The increment in thickness in the first portion 11Ha and the increment in thickness in the second portion 11Hb are different from each other. The increment in thickness in the first portion 11Ha is smaller than the increment in thickness in the second portion 11Hb. Since the increment in thickness in the first portion 11Ha and the increment in thickness in the second portion 11Hb are different from each other, the increment in thickness from the one end 11a to the other end 11b is not constant in the interlayer film 11H. Also, the interlayer film 11H has a first region having a wedge-like sectional shape in the thickness direction, and a second region having a wedge-like sectional shape in the thickness direction. The wedge angle in the first region and the wedge angle in the second region are different from each other. The wedge angle in the first region is smaller than the wedge angle in the second region.

The interlayer film may be a single-layered interlayer film with the shape shown in Fig. 9 having a one-layer structure, may be an interlayer film with the shape shown in Fig. 9 having a two-layer structure, and may be an interlayer film with the shape shown in Fig. 9 having a four or more-layer structure.

Fig. 10 is a sectional view schematically showing an interlayer film for laminated glass in accordance with a tenth embodiment of the present invention. In Fig. 10, a section in the thickness direction of an interlayer film 11I is shown.

The interlayer film 11I includes a first layer 1I (intermediate layer), a second layer 2I (surface layer), and a third layer 3I (surface layer).

The interlayer film 11I has one end 11a and the other end 11b being at an opposite side of the one end 11a. The one end 11a and the other end 11b are end parts of both sides facing each other. The sectional shape in the thickness direction of each of the second layer 2I and the third layer 3I is a wedge-like shape. The sectional shape in the thickness direction of the first layer 1I is a rectangular shape. The thicknesses of the second layer 2I and the third layer 3I are larger on the other end 11b side than on the one end 11a side. Accordingly, the thickness of the other end 11b of the interlayer film 11I is larger than the thickness of the one end 11a thereof. Accordingly, the interlayer film 11I

has a region being thin in thickness and a region being thick in thickness.

The interlayer film 11I has a region where the thickness increases from the one end 11a side to the other end 11b side. The interlayer film 11H has a portion where the increment in thickness decreases from the one end 11a side to the other end 11b side in the region where the thickness increases. The interlayer film 11I has a region having a wedge-like sectional shape in the thickness direction. The interlayer film 11I has a portion where the wedge angle decreases from the one end 11a side to the other end 11b side in the region having a wedge-like sectional shape in the thickness direction.

The interlayer film 11I has a portion 11Ia having a rectangular sectional shape in the thickness direction, and a portion 11Ib having a wedge-like sectional shape in the thickness direction. The second layer 2I and the third layer 3I have a portion having a rectangular sectional shape in the thickness direction, and a portion having a wedge-like sectional shape in the thickness direction. Since the increment in thickness differs between the portion 11Ia having a wedge-like sectional shape in the thickness direction, and the portion 11Ib having a wedge-like sectional shape in the thickness direction, the increment in thickness from the one end 11a to the other end 11b is not constant in the interlayer film 11I.

The interlayer film may be a single-layered interlayer film with the shape shown in Fig. 10 having a one-layer structure, may be an interlayer film with the shape shown in Fig. 10 having a two-layer structure, and may be an interlayer film with the shape shown in Fig. 10 having a four or more-layer structure.

For reference, an interlayer film that is not included in the interlayer film according to the present invention is shown in Fig. 12.

In a wedge-like interlayer film 101 shown in Fig. 12, the increment in thickness is constant from one end 101a to the other end 101b.

A distance between one end and the other end of the interlayer film is denoted by L. It is preferred that the interlayer film have a minimum thickness in a region from the position of 0L to the position of 0.4L from the one end toward the other end, and have a maximum thickness in a region from the position of 0L to the position of 0.4L from the other end toward the one end. It is more preferred that the interlayer film have a minimum thickness in a region from the position of 0L to the position of 0.3L from the one end toward the other end, and have a maximum thickness in a region from the position of 0L to the position of 0.3L from the other end toward the one end. It is still more preferred that the interlayer film have a minimum thickness in a region from the position of 0L to the position of 0.2L from the one end toward the other end, and have a maximum thickness in a region from the position of 0L to the position of 0.2L from the other end toward the one end. It is further preferred that the interlayer film have a minimum thickness in a region from the position of 0L to the position of 0.1L from the one end toward the other end, and have a maximum thickness in a region from the position of 0L to the position of 0.1L from the other end toward the one end. It is especially preferred that the interlayer film have a minimum thickness at the one end and have a maximum thickness at the other end.

The distance L between one end and the other end of the interlayer film is preferably 3 m or less, more preferably 2 m or less, especially preferably 1.5 m or less, and preferably 0.5 m or more, more preferably 0.8 m or more, and especially preferably 1 m or more.

The maximum thickness of the interlayer film is preferably 0.1 mm or more, more preferably 0.25 mm or more, further preferably 0.5 mm or more, especially preferably 0.8 mm or more and is preferably 3 mm or less, more preferably 2 mm or less, further preferably 1.5 mm or less.

From the viewpoint of the practical aspect and the viewpoint of sufficiently enhancing the adhesive strength and the penetration resistance, the maximum thickness of a surface layer is preferably 0.001 mm or more, more preferably 0.2 mm or more, further preferably 0.3 mm or more, and is preferably 1 mm or less, and more preferably 0.8 mm or less.

From the viewpoint of the practical aspect and the viewpoint of sufficiently enhancing the penetration resistance, the maximum thickness of a layer (intermediate layer) arranged between two surface layers is preferably 0.001 mm or more, more preferably 0.1 mm or more, and further preferably 0.2 mm or more and is preferably 0.8 mm or less, more preferably 0.6 mm or less, and further preferably 0.3 mm or less.

The interlayer film is used, for example, in laminated glass serving as a head-up display (HUD). It is preferred that the interlayer film be an interlayer film for a head-up display (HUD). When the interlayer film is used in a laminated glass that is a head-up display, the interlayer film has a region for display corresponding to a display region of the head-up display. The region for display is a region capable of favorably displaying information.

In order to suppress double images, the wedge angle $\theta$ of the interlayer film can be appropriately set according to the fitting angle of the laminated glass. The wedge angle $\theta$ is a wedge angle of the interlayer film as a whole.

The wedge angle $\theta$ of the interlayer film is an interior angle formed at the intersection point between a straight line connecting surface parts on the one side of the interlayer film (first surface part) of the maximum thickness part and the minimum thickness part in the interlayer film, and a straight line connecting surface parts of the other side of the interlayer film (second surface part) of the maximum thickness part and the minimum thickness part in the interlayer film.

When there are a plurality of maximum thickness parts, when there are a plurality of minimum thickness parts, when the maximum thickness part is located in a certain region, or when the minimum thickness part is located in a certain region, the maximum thickness part and the minimum thickness part for determining the wedge angle $\theta$ are

selected so that the wedge angle θ to be determined is the maximum.

From the viewpoint of suppressing double images more effectively, the wedge angle θ of the interlayer film is preferably 0.05 mrad (0.00288 degrees) or more, more preferably 0.1 mrad (0.00575 degrees) or more, further preferably 0.2 mrad (0.0115 degrees) or more. When the wedge angle θ is the above lower limit or more, it is possible to obtain laminated glass suited for cars such as a truck or a bus in which the attachment angle of the windshield is large.

From the viewpoint of suppressing double images more effectively, the wedge angle θ of the interlayer film is preferably 2 mrad (0.1146 degrees) or less, and more preferably 0.7 mrad (0.0401 degrees) or less. When the wedge angle θ is the above upper limit or less, it is possible to obtain laminated glass suited for cars such as a sports car in which the attachment angle of the windshield is small.

As a measuring device for use for measurement of a wedge angle (θ) of the interlayer film, and a thickness of the interlayer film, a contact type thickness meter "TOF-4R" (available from Yamabun Electronics Co., Ltd.) or the like can be recited.

Measurement of the thickness is conducted such that the distance is the shortest from the one end toward the other end by using the above-described measuring device at a film conveyance speed of 2.15 mm/minute to 2.25 mm/minute.

As a measuring device for use for measurement of a wedge angle (θ) of the interlayer film, and a thickness of the interlayer film after the interlayer film is made into laminated glass, a non-contact type multilayer film thickness measuring instrument "OPTIGAUGE" (available from Lumetrics, Inc.) or the like can be recited. Use of this measuring instrument makes it possible to measure the thickness of the interlayer film while the interlayer film is in the laminated glass.

From the viewpoint of suppressing double images more effectively, it is preferred that the interlayer film have the region for display in a region between a position of 6 cm from the one end toward the other end of the interlayer film and a position of 63.8 cm from the one end toward the other end.

From the viewpoint of suppressing double images more effectively, it is more preferred that the interlayer film have the region for display in a region between a position of 8 cm from the one end toward the other end of the interlayer film and a position of 61.8 cm from the one end toward the other end.

From the viewpoint of suppressing double images more effectively, it is further preferred that the interlayer film have the region for display in a region between a position of 9 cm from the one end toward the other end of the interlayer film and a position of 60.8 cm from the one end toward the other end.

From the viewpoint of suppressing double images more effectively, it is especially preferred that the interlayer film have the region for display in a region between a position of 9.5 cm from the one end toward the other end of the interlayer film and a position of 60.3 cm from the one end toward the other end.

From the viewpoint of suppressing double images more effectively, it is most preferred that the interlayer film have the region for display in a region between a position of 10 cm from the one end toward the other end of the interlayer film and a position of 59.8 cm from the one end toward the other end.

The region for display may exist in a part or the whole of the region up to the aforementioned position (for example, 63.8 cm) from the one end toward the other end of the interlayer film. The region for display may exist in a size of about 30 cm in the direction connecting the one end and the other end.

From the viewpoint of suppressing double images effectively, it is preferred that the interlayer film have a portion with a sectional shape in the thickness direction of a wedge-like shape in the region between a position of 6 cm from the one end toward the other end of the interlayer film and a position of 63.8 cm from the one end toward the other end.

From the viewpoint of suppressing double images effectively, it is more preferred that the interlayer film have a portion having a wedge-like sectional shape in the thickness direction in the region between a position of 8 cm from the one end toward the other end of the interlayer film and a position of 61.8 cm from the one end toward the other end.

From the viewpoint of suppressing double images effectively, it is further preferred that the interlayer film have a portion having a wedge-like sectional shape in the thickness direction in the region between a position of 9 cm from the one end toward the other end of the interlayer film and a position of 60.8 cm from the one end toward the other end.

From the viewpoint of suppressing double images effectively, it is especially preferred that the interlayer film have a portion with a sectional shape in the thickness direction of a wedge-like shape in the region between a position of 9.5 cm from the one end toward the other end of the interlayer film and a position of 60.3 cm from the one end toward the other end.

From the viewpoint of suppressing double images effectively, it is most preferred that the interlayer film have a portion with a sectional shape in the thickness direction of a wedge-like shape in the region between a position of 10 cm from the one end toward the other end of the interlayer film and a position of 59.8 cm from the one end toward the other end.

The portion with a sectional shape in the thickness direction of a wedge-like shape may exist in a part or the whole of the region up to the aforementioned position (for example, 63.8 cm) from the one end toward the other end. The portion having a wedge-like sectional shape in the thickness direction may exist in a size of about 30 cm in the direction connecting the one end and the other end.

The interlayer film may have a shading region. The shading region may be separate from the region for display. The shading region is provided so as to prevent a driver from feeling glare while driving, for example, by sunlight or outdoor lighting. The shading region can be provided so as to impart the heat blocking property. It is preferred that the shading region be located in an edge portion of the interlayer film. It is preferred that the shading region be belt-shaped.

In the shading region, a coloring agent or a filler may be used so as to change the color and the visible light transmittance. The coloring agent or the filler may be contained in a partial region in the thickness direction of the interlayer film and may be contained in the entire region in the thickness direction of the interlayer film.

From the viewpoint of providing better display, and further broadening the field of view, the visible light transmittance of the region for display is preferably 70% or more, more preferably 80% or more, further preferably 88% or more, especially preferably 90% or more. It is preferred that the visible light transmittance of the region for display be higher than the visible light transmittance of the shading region. The visible light transmittance of the region for display may be lower than the visible light transmittance of the shading region. The visible light transmittance of the region for display is higher than the visible light transmittance of the shading region preferably by 50% or more, more preferably by 60% or more.

When the visible light transmittance varies in the region for display and the shading region of the interlayer film, the visible light transmittance is measured at the center position of the region for display and at the center position of the shading region.

The visible light transmittance at a wavelength ranging from 380 nm to 780 nm of the obtained laminated glass can be measured by using a spectrophotometer ("U-4100" available from Hitachi High-Tech Corporation) in accordance with JIS R3211:1998. As the glass plate, it is preferred to use clear glass having a thickness of 2 mm.

It is preferred that the region for display have a length direction and a width direction. For excellent versatility of the interlayer film, it is preferred that the width direction of the region for display be the direction connecting the one end and the other end. It is preferred that the region for display be belt-shaped.

It is preferred that the interlayer film have an MD direction and a TD direction. For example, the interlayer film is obtained by melt extrusion molding. The MD direction is a flow direction of an interlayer film at the time of producing the interlayer film. The TD direction is a direction orthogonal to the flow direction of an interlayer film at the time of producing the interlayer film and a direction orthogonal to the thickness direction of the interlayer film. It is preferred that the one end and the other end be located at the opposite sides of the TD direction.

Hereinafter, materials that can be used in the interlayer film according to the present invention are specifically described.

(Light stabilizer)

The interlayer film contains a light stabilizer. It is preferred that the first layer contain a light stabilizer. It is preferred that the second layer contain a light stabilizer. It is preferred that the third layer contain a light stabilizer. By using the light stabilizer, deterioration in resin can be effectively suppressed, and the effect of the present invention is effectively exerted. Also, by using the light stabilizer, the visible light transmittance is more difficult to decrease. One kind of the light stabilizer may be used alone and two or more kinds thereof may be used in combination.

From the viewpoint of exerting the effect of the present invention more effectively, it is preferred that the light stabilizer be a light stabilizer in which a carbon atom, a hydrogen atom or an oxygen atom of an alkoxy group is bonded to a nitrogen atom of a piperidine structure, and it is more preferred that the light stabilizer be a light stabilizer in which a carbon atom or an oxygen atom of an alkoxy group is bonded to a nitrogen atom of a piperidine structure. The light stabilizer is preferably a light stabilizer in which a carbon atom is bonded to a nitrogen atom of a piperidine structure, and also preferably a light stabilizer in which an oxygen atom of an alkoxy group is bonded to a nitrogen atom of a piperidine structure.

From the viewpoint of exerting the effect of the present invention more effectively, it is more preferred that the light stabilizer be a hindered amine light stabilizer. Examples of the hindered amine light stabilizer include hindered amine light stabilizers in which a carbon atom, a hydrogen atom or an oxygen atom of an alkoxy group is bonded to a nitrogen atom of a piperidine structure.

From the viewpoint of exerting the effect of the present invention more effectively, it is preferred that the hindered amine light stabilizer be a hindered amine light stabilizer in which a carbon atom, a hydrogen atom or an oxygen atom of an alkoxy group is bonded to a nitrogen atom of a piperidine structure. From the viewpoint of exerting the effect of the present invention further effectively, it is more preferred that the hindered amine light stabilizer be a hindered amine light stabilizer in which a carbon atom, or an oxygen atom of an alkoxy group is bonded to a nitrogen atom of a piperidine structure. The hindered amine light stabilizer is preferably a hindered amine light stabilizer in which a carbon atom is bonded to a nitrogen atom of a piperidine structure, and also preferably a hindered amine light stabilizer in which an oxygen atom of an alkoxy group is bonded to a nitrogen atom of a piperidine structure.

In the light stabilizer in which a carbon atom is bonded to a nitrogen atom of a piperidine structure, the carbon

atom bonded to the nitrogen atom of the piperidine structure is preferably a carbon atom of an alkyl group or an alkylene group bonded to the nitrogen atom of the piperidine structure.

Examples of the hindered amine light stabilizer in which a carbon atom is bonded to a nitrogen atom of a piperidine structure include "Tinuvin 765" and "Tinuvin 622SF" available from BASF Japan Ltd., and "ADK STAB LA-52" available from ADEKA, and the like.

Examples of the hindered amine light stabilizer in which an alkoxy group is bonded to a nitrogen atom of a piperidine structure include "Tinuvin XT-850FF" and "Tinuvin XT-855FF" available from BASF Japan Ltd., and "ADK STAB LA-81" available from ADEKA, and the like.

Examples of the hindered amine light stabilizer in which a hydrogen atom is bonded to a nitrogen atom of a piperidine structure include "Tinuvin 770DF" available from BASF Japan Ltd., and "Hostavin N24" available from Clariant, and the like.

From the viewpoint of exerting the effect of the present invention more effectively, the light stabilizer has a molecular weight of preferably 2000 or less, more preferably 1000 or less, further preferably 700 or less.

It is preferred that the present interlayer film have a distribution in a content on a weight basis of the light stabilizer in the direction connecting the one end and the other end such that the content on a weight basis of the light stabilizer is larger on the other end side of the direction connecting the one end and the other end. It is preferred that the interlayer film have a region where the content on a weight basis of the light stabilizer is smaller than the content on a weight basis of the light stabilizer on the other end side in the direction connecting the one end the other end. It is preferred that the interlayer film have a distribution in a content on a weight basis of the light stabilizer in the direction connecting the one end and the other end such that the content on a weight basis of the light stabilizer on the other end side in the direction connecting the one end and the other end is larger than the content on a weight basis of the light stabilizer on the one end side in the direction connecting the one end and the other end. It is preferred that the interlayer film have a distribution in a content on a weight basis of the light stabilizer in the direction connecting the one end and the other end such that the content on a weight basis of the light stabilizer on the other end side in the direction connecting the one end and the other end is larger than the content on a weight basis of the light stabilizer in the center in the direction connecting the one end and the other end. When a distance between one end and the other end of the interlayer film is denoted by L, it is preferred that the interlayer film have a distribution in a content on a weight basis of the light stabilizer in the direction connecting the one end and the other end such that the content on a weight basis of the light stabilizer is large, for example, in a region of 0.05L inwardly from the other end. It is preferred that the interlayer film have a distribution in a content on a weight basis of the light stabilizer in the direction connecting the one end and the other end such that the content on a weight basis of the light stabilizer in a region of 0.05L inwardly from the other end is larger than the content on a weight basis of the light stabilizer in a region of 0.05L inwardly from the one end. It is preferred that the interlayer film have a distribution in a content on a weight basis of the light stabilizer in the direction connecting the one end and the other end such that the content on a weight basis of the light stabilizer in a region of 0.05L inwardly from the other end is larger than the content on a weight basis of the light stabilizer in a region of 0.05L in the center in the direction connecting the one end and the other direction. In a laminated glass obtained with an interlayer film in which the increment in thickness is not constant from the one end to the other end, a stress is likely to be generated especially on the other end side, and thus a gap is likely to be generated in the interlayer film on the other end side. Since the light stabilizer exists with such a distribution, it is possible to prevent generation of a gap more effectively on the other end side.

In 100% by weight of the interlayer film, the content of the light stabilizer is preferably 0.01% by weight or more, and more preferably 0.05% by weight or more and is preferably 0.5% by weight or less, more preferably 0.3% by weight or less. When the content of the light stabilizer is the above lower limit or more and the above upper limit or less, it is possible to exert the effect of the present invention more effectively.

In 100% by weight of a layer (a first layer, a second layer, or a third layer) containing the light stabilizer, the content of the light stabilizer is preferably 0.01% by weight or more, more preferably 0.05% by weight or more, and is preferably 0.5% by weight or less, more preferably 0.3% by weight or less. When the content of the light stabilizer is the above lower limit or more and the above upper limit or less, it is possible to exert the effect of the present invention more effectively.

(Oxidation inhibitor)

The interlayer film contains an oxidation inhibitor. It is preferred that the first layer contain an oxidation inhibitor. It is preferred that the second layer contain an oxidation inhibitor. It is preferred that the third layer contain an oxidation inhibitor. By using the oxidation inhibitor, deterioration in resin can be effectively suppressed, and the effect of the present invention is effectively exerted. By using the oxidation inhibitor, the visible light transmittance becomes still less likely to decrease. One kind of the oxidation inhibitor may be used alone, and two or more kinds thereof may be used in combination.

From the viewpoint of exerting the effect of the present invention more effectively, it is preferred that the first layer contain the light stabilizer and the oxidation inhibitor.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

From the viewpoint of exerting the effect of the present invention more effectively, it is preferred that the oxidation inhibitor be a phenol-based oxidation inhibitor or a phosphorus-based oxidation inhibitor, and it is more preferred that the oxidation inhibitor be a phenol-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, and bis(3-t-butyl-4-hydroxy-5-methylbenzenepropanoic acid)ethylenebis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-dit-butylphenyl) phosphite, bis(2,4-di-t-butyl-6-methylphenyl)ethyl ester phosphorous acid, 2,2'-methylenebis(4,6-di-t-butyl-1-phenyloxy)(2-ethylhexyloxy)phosphorus, and the like. One kind or two or more kinds among these oxidation inhibitors are suitably used.

From the viewpoint of exerting the effect of the present invention more effectively, the oxidation inhibitor has a molecular weight of preferably 220 or more, more preferably 250 or more, and preferably 1000 or less.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and the like.

It is preferred that the present interlayer film have a distribution in a content on a weight basis of the oxidation inhibitor in the direction connecting the one end and the other end such that the content on a weight basis of the oxidation inhibitor is larger on the other end side of the direction connecting the one end and the other end. It is preferred that the interlayer film have a region where the content on a weight basis of the oxidation inhibitor is smaller than the content on a weight basis of the oxidation inhibitor on the other end side in the direction connecting the one end the other end. It is preferred that the interlayer film have a distribution in a content on a weight basis of the oxidation inhibitor in the direction connecting the one end and the other end such that the content on a weight basis of the oxidation inhibitor on the other end side in the direction connecting the one end and the other end is larger than the content on a weight basis of the oxidation inhibitor on the one end side in the direction connecting the one end and the other end. It is preferred that the interlayer film have a distribution in a content on a weight basis of the oxidation inhibitor in the direction connecting the one end and the other end such that the content on a weight basis of the oxidation inhibitor on the other end side in the direction connecting the one end and the other end is larger than the content on a weight basis of the oxidation inhibitor in the center in the direction connecting the one end and the other end. When a distance between one end and the other end of the interlayer film is denoted by L, it is preferred that the interlayer film have a distribution in a content on a weight basis of the oxidation inhibitor in the direction connecting the one end and the other end such that the content on a weight basis of the oxidation inhibitor is large, for example, in a region of 0.05L inwardly from the other end. It is preferred that the interlayer film have a distribution in a content on a weight basis of the oxidation inhibitor in the direction connecting the one end and the other end such that the content on a weight basis of the oxidation inhibitor in a region of 0.05L inwardly from the other end is larger than the content on a weight basis of the oxidation inhibitor in a region of 0.05L inwardly from the one end. It is preferred that the interlayer film have a distribution in a content on a weight basis of the oxidation inhibitor in the direction connecting the one end and the other end such that the content on a weight basis of the oxidation inhibitor in a region of 0.05L inwardly from the other end is larger than the content on a weight basis of the oxidation inhibitor in a region of 0.05L in the center in the direction connecting the one end and the other end. In a laminated glass obtained with an interlayer film in which the increment in thickness is not constant from the one end to the other end, a stress is likely to be generated especially on the other end side, and thus a gap is likely to be generated in the interlayer film on the other end side. Since the oxidation inhibitor exists with such a distribution, it is possible to prevent generation of a gap more effectively on the other end side.

In 100% by weight of the interlayer film, the content of the oxidation inhibitor is preferably 0.1% by weight or more, and more preferably 0.2% by weight or more and is preferably 2% by weight or less, and more preferably 1.8% by weight or less. When the content of the oxidation inhibitor is the above lower limit or more and the above upper limit or less, it is possible to exert the effect of the present invention more effectively, and it is possible to keep high visible

light transmittance for a long term.

In 100% by weight of a layer (a first layer, a second layer, or a third layer) containing the oxidation inhibitor, the content of the oxidation inhibitor is preferably 0.1% by weight or more, more preferably 0.2% by weight or more, and is preferably 2% by weight or less, more preferably 1.8% by weight or less. When the content of the oxidation inhibitor is the above lower limit or more and the above upper limit or less, it is possible to exert the effect of the present invention more effectively, and it is possible to keep high visible light transmittance for a long term.

(Thermoplastic resin)

It is preferred that the interlayer film contain a resin (hereinafter, sometimes described as a resin (0)). It is preferred that the interlayer film contain a thermoplastic resin (hereinafter, sometimes described as a thermoplastic resin (0)). It is preferred that the interlayer film contain a polyvinyl acetal resin (hereinafter, sometimes described as a polyvinyl acetal resin (0)) as the thermoplastic resin (0). It is preferred that the first layer contain a resin (hereinafter, sometimes described as a resin (1)). It is preferred that the first layer contain a thermoplastic resin (hereinafter, sometimes described as a thermoplastic resin (1)). It is preferred that the first layer contain a polyvinyl acetal resin (hereinafter, sometimes described as a polyvinyl acetal resin (1)) as the thermoplastic resin (1). It is preferred that the second layer contain a resin (hereinafter, sometimes described as a resin (2)). It is preferred that the second layer contain a thermoplastic resin (hereinafter, sometimes described as a thermoplastic resin (2)). It is preferred that the second layer contain a polyvinyl acetal resin (hereinafter, sometimes described as a polyvinyl acetal resin (2)) as the thermoplastic resin (2). It is preferred that the third layer contain a resin (hereinafter, sometimes described as a resin (3)). It is preferred that the third layer contain a thermoplastic resin (hereinafter, sometimes described as a thermoplastic resin (3)). It is preferred that the third layer contain a polyvinyl acetal resin (hereinafter, sometimes described as a polyvinyl acetal resin (3)) as the thermoplastic resin (3). The resin (1), the resin (2), and the resin (3) may be the same as or different from one another. For still higher sound insulating property, it is preferred that the resin (1) be different from the resin (2) and the resin (3). The thermoplastic resin (1), the thermoplastic resin (2), and the thermoplastic resin (3) may be the same or different from one another. For still higher sound insulating property, it is preferred that the thermoplastic resin (1) be different from the thermoplastic resin (2) and the thermoplastic resin (3). Each of the polyvinyl acetal resin (1), the polyvinyl acetal resin (2), and the polyvinyl acetal resin (3) may be the same or different from one another. For still higher sound insulating property, it is preferred that the polyvinyl acetal resin (1) be different from the polyvinyl acetal resin (2) and the polyvinyl acetal resin (3). One kind of each of the thermoplastic resin (0), the thermoplastic resin (1), the thermoplastic resin (2), and the thermoplastic resin (3) may be used alone and two or more kinds thereof may be used in combination. One kind of each of the polyvinyl acetal resin (0), the polyvinyl acetal resin (1), the polyvinyl acetal resin (2), and the polyvinyl acetal resin (3) may be used alone and two or more kinds thereof may be used in combination.

Examples of the thermoplastic resin include a polyvinyl acetal resin, an ethylene-vinyl acetate copolymer resin, an ethylene-acrylic acid copolymer resin, a polyurethane resin, an ionomer resin, a polyvinyl alcohol resin, and the like. Thermoplastic resins other than these may be used.

For example, the polyvinyl acetal resin can be produced by acetalizing polyvinyl alcohol (PVA) with an aldehyde. It is preferred that the polyvinyl acetal resin be an acetalized product of polyvinyl alcohol. The polyvinyl alcohol can be obtained, for example, by saponifying polyvinyl acetate. The saponification degree of the polyvinyl alcohol generally lies within the range of 70% by mole to 99.9% by mole.

The average polymerization degree of the polyvinyl alcohol (PVA) is preferably 200 or more, more preferably 500 or more, even more preferably 1500 or more, further preferably 1600 or more, especially preferably 2600 or more, most preferably 2700 or more and is preferably 5000 or less, more preferably 4000 or less, further preferably 3500 or less. When the average polymerization degree is the above lower limit or more, the penetration resistance of the laminated glass is further enhanced. When the average polymerization degree is the above upper limit or less, formation of an interlayer film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. The number of carbon atoms of the acetal group in the polyvinyl acetal resin is preferably 3 to 5, more preferably 3 or 4. When the number of carbon atoms of the acetal group in the polyvinyl acetal resin is 3 or more, the glass transition temperature of the interlayer film is sufficiently lowered. The number of carbon atoms of the acetal group in the polyvinyl acetal resin may be 4 or 5.

The aldehyde is not particularly limited. In general, an aldehyde with 1 to 10 carbon atoms is suitably used. Examples of the aldehyde with 1 to 10 carbon atoms include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. The aldehyde is preferably propionaldehyde, n-butyraldehyde, isobutyraldehyde, n-hexylaldehyde, or n-valeraldehyde, more preferably propionaldehyde, n-butyraldehyde or isobutyraldehyde, and further preferably n-butyraldehyde. One kind of the aldehyde may be used alone, and two or more kinds thereof may be used in combination.

The content of the hydroxyl group (the amount of hydroxyl groups) of the polyvinyl acetal resin (0) is preferably 15% by mole or more and more preferably 18% by mole or more and is preferably 40% by mole or less and more preferably 35% by mole or less. When the content of the hydroxyl group is the above lower limit or more, the adhesive force of the interlayer film is further enhanced. Moreover, when the content of the hydroxyl group is the above upper limit or less, the flexibility of the interlayer film is enhanced and the handling of the interlayer film is facilitated.

The content of the hydroxyl group (the amount of hydroxyl groups) of the polyvinyl acetal resin (1) is preferably 17% by mole or more, more preferably 20% by mole or more, and further preferably 22% by mole or more. The content of the hydroxyl group (the amount of hydroxyl groups) of the polyvinyl acetal resin (1) is preferably 30% by mole or less, more preferably 28% by mole or less, still more preferably 27% by mole or less, further preferably 25% by mole or less, especially preferably less than 25% by mole, most preferably 24% by mole or less. When the content of the hydroxyl group is the above lower limit or more, the mechanical strength of the interlayer film is further enhanced. In particular, when the content of the hydroxyl group of the polyvinyl acetal resin (1) is 20% by mole or more, the resin is high in reaction efficiency and is excellent in productivity, and moreover, when being 28% by mole or less, the sound insulating property of laminated glass is further enhanced. Moreover, when the content of the hydroxyl group is the above-described upper limit or less or less than the above-described upper limit, the flexibility of the interlayer film is enhanced and the handling of the interlayer film is facilitated.

Each of the contents of the hydroxyl group of the polyvinyl acetal resin (2) and the polyvinyl acetal resin (3) is preferably 25% by mole or more, more preferably 28% by mole or more, still more preferably 30% by mole or more, further preferably more than 31% by mole, still further preferably 31.5% by mole or more, especially preferably 32% by mole or more, and most preferably 33% by mole or more. Each of the contents of the hydroxyl group of the polyvinyl acetal resin (2) and the polyvinyl acetal resin (3) is preferably 38% by mole or less, more preferably 37% by mole or less, further preferably 36.5% by mole or less, especially preferably 36% by mole or less. When the content of the hydroxyl group is the above-described lower limit or more or more than the above-described lower limit, the adhesive force of the interlayer film is further enhanced. Moreover, when the content of the hydroxyl group is the above upper limit or less, the flexibility of the interlayer film is enhanced and the handling of the interlayer film is facilitated.

From the viewpoint of further enhancing the sound insulating property, it is preferred that the content of the hydroxyl group of the polyvinyl acetal resin (1) be lower than the content of the hydroxyl group of the polyvinyl acetal resin (2). From the viewpoint of further enhancing the sound insulating property, it is preferred that the content of the hydroxyl group of the polyvinyl acetal resin (1) be lower than the content of the hydroxyl group of the polyvinyl acetal resin (3). From the viewpoint of still further enhancing the sound insulating property, the absolute value of difference between the content of the hydroxyl group of the polyvinyl acetal resin (1) and the content of the hydroxyl group of the polyvinyl acetal resin (2) is preferably 1% by mole or more, more preferably 5% by mole or more, further preferably 9% by mole or more, especially preferably 10% by mole or more, most preferably 12% by mole or more. From the viewpoint of still further enhancing the sound insulating property, the absolute value of difference between the content of the hydroxyl group of the polyvinyl acetal resin (1) and the content of the hydroxyl group of the polyvinyl acetal resin (3) is preferably 1% by mole or more, more preferably 5% by mole or more, further preferably 9% by mole or more, especially preferably 10% by mole or more, most preferably 12% by mole or more. An absolute value of difference between the content of the hydroxyl group of the polyvinyl acetal resin (1) and the content of the hydroxyl group of the polyvinyl acetal resin (2) is preferably 20% by mole or less. An absolute value of difference between the content of the hydroxyl group of the polyvinyl acetal resin (1) and the content of the hydroxyl group of the polyvinyl acetal resin (3) is preferably 20% by mole or less.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree (the amount of acetyl groups) of the polyvinyl acetal resin (0) is preferably 0.1% by mole or more, more preferably 0.3% by mole or more, further preferably 0.5% by mole or more and is preferably 30% by mole or less, more preferably 25% by mole or less, and further preferably 20% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced.

The acetylation degree (the amount of acetyl groups) of the polyvinyl acetal resin (1) is preferably 0.01% by mole or more, more preferably 0.1% by mole or more, even more preferably 7% by mole or more, further preferably 9% by mole or more and is preferably 30% by mole or less, more preferably 25% by mole or less, further preferably 24% by mole or less, especially preferably 20% by mole or less. When the acetylation degree is the above lower limit or more, the compatibility between the polyvinyl acetal resin and a plasticizer is enhanced. When the acetylation degree is the

above upper limit or less, with regard to the interlayer film and laminated glass, the moisture resistance thereof is enhanced. In particular, when the acetylation degree of the polyvinyl acetal resin (1) is 0.1% by mole or more and is 25% by mole or less, the resulting laminated glass is excellent in penetration resistance.

The acetylation degree of each of the polyvinyl acetal resin (2) and the polyvinyl acetal resin (3) is preferably 0.01% by mole or more and more preferably 0.5% by mole or more and is preferably 10% by mole or less and more preferably 2% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of the polyvinyl acetal resin (0) (the butyralization degree in the case of a polyvinyl butyral resin) is preferably 60% by mole or more and more preferably 63% by mole or more and is preferably 85% by mole or less, more preferably 75% by mole or less, further preferably 70% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree of the polyvinyl acetal resin (1) (the butyralization degree in the case of a polyvinyl butyral resin) is preferably 47% by mole or more and more preferably 60% by mole or more, and is preferably 85% by mole or less, more preferably 80% by mole or less, further preferably 75% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree of each of the polyvinyl acetal resin (2) and the polyvinyl acetal resin (3) (the butyralization degree in the case of a polyvinyl butyral resin) is preferably 55% by mole or more and more preferably 60% by mole or more and is preferably 75% by mole or less and more preferably 71% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

In 100% by weight of the thermoplastic resin contained in the interlayer film, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the interlayer film, the content of the polyvinyl acetal resin may be 100% by weight or less. It is preferred that the main ingredient (50% by weight or more) of the thermoplastic resin of the interlayer film be a polyvinyl acetal resin.

In 100% by weight of the thermoplastic resin contained in the first layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the first layer, the content of the polyvinyl acetal resin may be 100% by weight or less. It is preferred that the main ingredient (50% by weight or more) of the thermoplastic resin of the first layer be a polyvinyl acetal resin.

In 100% by weight of the thermoplastic resin contained in the second layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the second layer, the content of the polyvinyl

acetal resin may be 100% by weight or less. It is preferred that the main ingredient (50% by weight or more) of the thermoplastic resin of the second layer be a polyvinyl acetal resin.

In 100% by weight of the thermoplastic resin contained in the third layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the third layer, the content of the polyvinyl acetal resin may be 100% by weight or less. It is preferred that the main ingredient (50% by weight or more) of the thermoplastic resin of the third layer be a polyvinyl acetal resin.

(Plasticizer)

From the viewpoint of further enhancing the adhesive strength of an interlayer film, it is preferred that the interlayer film contain a plasticizer (hereinafter, sometimes described as a plasticizer (0)). It is preferred that the first layer contain a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). When the thermoplastic resin contained in the interlayer film is a polyvinyl acetal resin, it is especially preferred that the interlayer film (the respective layers) contain a plasticizer. It is preferred that a layer containing a polyvinyl acetal resin contain a plasticizer.

The plasticizer is not particularly limited. As the plasticizer, a conventionally known plasticizer can be used. One kind of the plasticizer may be used alone and two or more kinds thereof may be used in combination.

Examples of the plasticizer include organic ester plasticizers such as a monobasic organic acid ester and a polybasic organic acid ester, organic phosphate plasticizers and organic phosphite plasticizers, and the like. It is preferred that the plasticizer be an organic ester plasticizer. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decylic acid, benzoic acid and the like.

Examples of the polybasic organic acid ester include an ester compound of a polybasic organic acid and an alcohol having a linear or branched structure of 4 to 8 carbon atoms, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. As the organic ester plasticizer, other organic ester plasticizer than those recited above may be used. As the adipic acid ester, adipic acid esters other than the aforementioned adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

[Chemical 1]

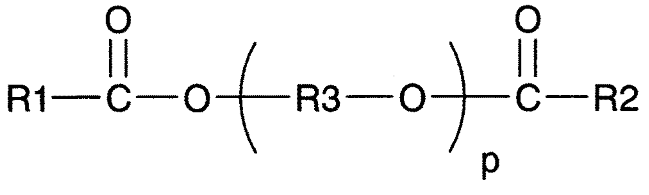

...(1)

In the formula (1), R1 and R2 each represent an organic group with 2 to 10 carbon atoms, R3 represents an

ethylene group, an isopropylene group, or an n-propylene group, and p represents an integer of 3 to 10. R1 and R2 in the formula (1) each are preferably an organic group with 5 to 10 carbon atoms, and more preferably an organic group with 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate. It is more preferred that the plasticizer include triethylene glycol di-2-ethylhexanoate (3GO) or triethylene glycol di-2-ethylbutyrate (3GH), and it is further preferred that the plasticizer include triethylene glycol di-2-ethylhexanoate (3GO).

In the interlayer film, the content of the plasticizer (0) per 100 parts by weight of the thermoplastic resin (0) is defined as content (0). The content (0) is preferably 5 parts by weight or more, more preferably 25 parts by weight or more, further preferably 30 parts by weight or more, and is preferably 100 parts by weight or less, more preferably 60 parts by weight or less, further preferably 50 parts by weight or less. When the content (0) is the above lower limit or more, the penetration resistance of the laminated glass is further enhanced. When the content (0) is the above upper limit or less, the transparency of the interlayer film is further enhanced.

In the first layer, the content of the plasticizer (1) relative to 100 parts by weight of the thermoplastic resin (1) is referred to as content (1). The content (1) is preferably 50 parts by weight or more, more preferably 55 parts by weight or more, further preferably 60 parts by weight or more. The content (1) is preferably 100 parts by weight or less, more preferably 90 parts by weight or less, further preferably 85 parts by weight or less, especially preferably 80 parts by weight or less. When the content (1) is the above lower limit or more, the flexibility of the interlayer film is enhanced and the handling of the interlayer film is facilitated. When the content (1) is the above upper limit or less, the penetration resistance of laminated glass is further enhanced.

In the second layer, the content of the plasticizer (2) per 100 parts by weight of the thermoplastic resin (2) is defined as a content (2). In the third layer, the content of the plasticizer (3) relative to 100 parts by weight of the thermoplastic resin (3) is defined as content (3). Each of the content (2) and the content (3) is preferably 5 parts by weight or more, more preferably 10 parts by weight or more, still more preferably 15 parts by weight or more, further preferably 20 parts by weight or more, especially preferably 24 parts by weight or more, and most preferably 25 parts by weight or more. Each of the content (2) and the content (3) is preferably 45 parts by weight or less, more preferably 40 parts by weight or less, further preferably 35 parts by weight or less, especially preferably 32 parts by weight or less, and most preferably 30 parts by weight or less. When the content (2) and the content (3) are the above lower limit or more, the flexibility of the interlayer film is enhanced and the handling of the interlayer film is facilitated. When the content (2) and the content (3) are the above upper limit or less, the penetration resistance of the laminated glass is further enhanced.

For the purpose of enhancing the sound insulating property of the laminated glass, it is preferred that the content (1) be larger than the content (2) and it is preferred that the content (1) be larger than the content (3).

From the viewpoint of further enhancing the sound insulating property of the laminated glass, each of the absolute value of difference between the content (2) and the content (1) and the absolute value of difference between the content (3) and the content (1) is preferably 10 parts by weight or more, more preferably 15 parts by weight or more, and further preferably 20 parts by weight or more. Each of the absolute value of difference between the content (2) and the content (1) and the absolute value of difference between the content (3) and the content (1) is preferably 80 parts by weight or less, more preferably 75 parts by weight or less, further preferably 70 parts by weight or less.

(Heat shielding substance)

It is preferred that the interlayer film contain a heat shielding substance. It is preferred that the first layer contain a heat shielding substance. It is preferred that the second layer contain a heat shielding substance. It is preferred that the third layer contain a heat shielding substance. One kind of the heat shielding substance may be used alone, and two or more kinds thereof may be used in combination.

It is preferred that the heat shielding substance contain at least one kind of Ingredient X among a phthalocyanine compound, a naphthalocyanine compound, and an anthracyanine compound or contain heat shielding particles. In this case, the heat shielding substance may contain both of the Ingredient X and the heat shielding particles.

Ingredient X:

It is preferred that the interlayer film contain at least one kind of Ingredient X among a phthalocyanine compound, a naphthalocyanine compound, and an anthracyanine compound. It is preferred that the first layer contain the Ingredient X. It is preferred that the second layer contain the Ingredient X. It is preferred that the third layer contain the Ingredient X. The Ingredient X is a heat shielding substance. One kind of the Ingredient X may be used alone and two or more kinds thereof may be used in combination.

The Ingredient X is not particularly limited. As the Ingredient X, conventionally known phthalocyanine compound,

naphthalocyanine compound and anthracyanine compound can be used.

Examples of the Ingredient X include phthalocyanine, a derivative of phthalocyanine, naphthalocyanine, a derivative of naphthalocyanine, anthracyanine, and a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding property and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. From the viewpoint of still further enhancing the heat shielding property of the interlayer film and the laminated glass, it is preferred that the Ingredient X have a structural unit in which an oxygen atom is bonded to a vanadium atom.

In 100% by weight of the interlayer film or in 100% by weight of a layer containing the Ingredient X (a first layer, a second layer, or a third layer), the content of the Ingredient X is preferably 0.001% by weight or more, more preferably 0.005% by weight or more, further preferably 0.01% by weight or more, especially preferably 0.02% by weight or more. In 100% by weight of the interlayer film or in 100% by weight of a layer containing the Ingredient X (a first layer, a second layer, or a third layer), the content of the Ingredient X is preferably 0.2% by weight or less, more preferably 0.1% by weight or less, further preferably 0.05% by weight or less, especially preferably 0.04% by weight or less. When the content of the Ingredient X is the above lower limit or more and the above upper limit or less, the heat shielding property is sufficiently enhanced and the visible light transmittance is sufficiently enhanced. For example, it is possible to make the visible light transmittance 70% or more.

Heat shielding particles:

It is preferred that the interlayer film contain heat shielding particles. It is preferred that the first layer contain the heat shielding particles. It is preferred that the second layer contain the heat shielding particles. It is preferred that the third layer contain the heat shielding particles. The heat shielding particle is of a heat shielding substance. By the use of heat shielding particles, infrared rays (heat rays) can be effectively cut off. One kind of the heat shielding particles may be used alone, and two or more kinds thereof may be used in combination.

From the viewpoint of further enhancing the heat shielding properties of laminated glass, it is more preferred that the heat shielding particles be metal oxide particles. It is preferred that the heat shielding particle be a particle (a metal oxide particle) formed from an oxide of a metal.

The energy amount of an infrared ray with a wavelength (780 nm or more) that is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays.

Examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, tungsten oxide particles, tin-doped indium oxide particles (ITO particles), tin-doped zinc oxide particles and silicon-doped zinc oxide particles, and lanthanum hexaboride ($LaB_6$) particles, and the like. Heat shielding particles other than these may be used as the heat shielding particles. For high heat ray shielding function, the heat shielding particles are preferably metal oxide particles, and more preferably ATO particles, GZO particles, IZO particles, ITO particles or tungsten oxide particles. In particular, since the heat ray shielding function is high and the particles are readily available, it is preferred that the heat shielding particles be ITO particles or tungsten oxide particles.

With regard to the interlayer film and laminated glass, from the viewpoint of further enhancing the heat shielding properties thereof, it is preferred that the tungsten oxide particles be metal-doped tungsten oxide particles. Examples of the "tungsten oxide particles" include metal-doped tungsten oxide particles. Examples of the metal-doped tungsten oxide particles include sodium-doped tungsten oxide particles, cesium-doped tungsten oxide particles, thallium-doped tungsten oxide particles, rubidium-doped tungsten oxide particles, and the like.

With regard to the interlayer film and laminated glass, from the viewpoint of further enhancing the heat shielding properties thereof, cesium-doped tungsten oxide particles are especially preferred. With regard to the interlayer film and laminated glass, from the viewpoint of still further enhancing the heat shielding properties thereof, it is preferred that the cesium-doped tungsten oxide particles be tungsten oxide particles represented by the formula: $Cs_{0.33}WO_3$.

The average particle diameter of the heat shielding particles is preferably 0.01 um or more, more preferably 0.02 um or more, and is preferably 0.1 um or less, more preferably 0.05 um or less. When the average particle diameter is the above lower limit or more, the heat ray shielding property is sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film or in 100% by weight of a layer containing the heat shielding particles (a first layer, a second layer, or a third layer), the content of the heat shielding particles (in particular, the content of tungsten oxide particles) is preferably 0.01% by weight or more, more preferably 0.1% by weight or more, further preferably 1% by weight or more, especially preferably 1.5% by weight or more. In 100% by weight of the interlayer film or in 100% by weight of a layer containing the heat shielding particles (a first layer, a second layer, or a third layer), the content of the heat shielding particles (in particular, the content of tungsten oxide particles) is preferably 6% by weight or less, more preferably 5.5% by weight or less, further preferably 4% by weight or less, especially preferably 3.5% by weight or less, most preferably 3% by weight or less. When the content of the heat shielding particles is the above lower limit or more and the above upper limit or less, the heat shielding property is sufficiently enhanced and the visible light transmittance is sufficiently enhanced.

(Metal salt)

It is preferred that the interlayer film contain at least one kind of metal salt (hereinafter, sometimes described as Metal salt M) of alkali metal salts and alkali earth metal salts. It is preferred that the first layer contain the Metal salt M. It is preferred that the second layer contain the Metal salt M. It is preferred that the third layer contain the Metal salt M. The alkali earth metal means six metals of Be, Mg, Ca, Sr, Ba, and Ra. By the use of the Metal salt M, controlling the adhesivity between the interlayer film and a lamination glass member such as a glass plate or the adhesivity between respective layers in the interlayer film is facilitated. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is preferred that the metal salt included in the interlayer film contain at least one kind of metal among K and Mg.

As the metal salt M, an alkali metal salt of an organic acid having 2 to 16 carbon atoms, and an alkali earth metal salt of an organic acid having 2 to 16 carbon atoms can be used. The metal salt M may include a magnesium carboxylate having 2 to 16 carbon atoms, or a potassium carboxylate having 2 to 16 carbon atoms.

Examples of the magnesium carboxylate with 2 to 16 carbon atoms and the potassium carboxylate with 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in the interlayer film containing the Metal salt M or a layer containing the Metal salt M (a first layer, a second layer, or a third layer) is preferably 5 ppm or more, more preferably 10 ppm or more, further preferably 20 ppm or more, and is preferably 300 ppm or less, more preferably 250 ppm or less, further preferably 200 ppm or less. When the total of the contents of Mg and K is the above lower limit or more and the above upper limit or less, the adhesivity between the interlayer film and a lamination glass member such as a glass plate or the adhesivity between respective layers in the interlayer film can be further well controlled.

(Ultraviolet ray screening agent)

It is preferred that the interlayer film contain an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. By the use of an ultraviolet ray screening agent, even when the interlayer film and the laminated glass are used for a long period of time, the visible light transmittance becomes further hard to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. The ultraviolet ray screening agent is more preferably an ultraviolet ray screening agent having a benzotriazole structure or an ultraviolet ray screening agent having a benzophenone structure, and is further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface may be coated. Examples of the coating material for the surface of the ultraviolet ray screening agent containing a metal oxide include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-diamylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray screening performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxalanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of the interlayer film or in 100% by weight of a layer containing the ultraviolet ray screening agent (a first layer, a second layer, or a third layer), the content of the ultraviolet ray screening agent and the content of the benzotriazole compound are preferably 0.1% by weight or more, more preferably 0.2% by weight or more, further preferably 0.3% by weight or more, especially preferably 0.5% by weight or more. In this case, the visible light transmittance becomes still less likely to decrease even when the interlayer film and the laminated glass are used for a long period. In 100% by weight of the interlayer film or in 100% by weight of a layer containing the ultraviolet ray screening agent (a first layer, a second layer, or a third layer), the content of the ultraviolet ray screening agent and the content of the benzotriazole compound are preferably 2.5% by weight or less, more preferably 2% by weight or less, further preferably 1% by weight or less, especially preferably 0.8% by weight or less. Especially, by setting the content of the ultraviolet ray screening agent to be 0.2% by weight or more in 100% by weight of a layer containing the ultraviolet ray

screening agent, the visible light transmittance becomes still less likely to decrease even when the interlayer film and the laminated glass are used for a long period.

(Other ingredients)

Each of the interlayer film, the first layer, the second layer, and the third layer may contain other ingredient as necessary. Examples of other ingredients may include additives such as a coupling agent, a dispersing agent, a surfactant, a fire retardant, an antistatic agent, an adhesion adjusting agent other than metal salt, a moisture-proofing agent, a fluorescent brightener, and an infrared absorber, and the like. One kind of these additives may be used alone, and two or more kinds thereof may be used in combination.

(Other details of interlayer film for laminated glass)

The interlayer film may be wound to be formed into a roll body of the interlayer film. The roll body may include a winding core and an interlayer film wound on the outer periphery of the winding core.
The method for producing the interlayer film is not particularly limited.
For the reason of excellent production efficiency of the interlayer film, it is preferred that the second layer and the third layer contain the same polyvinyl acetal resin. For the reason of excellent production efficiency of the interlayer film, it is more preferred that the second layer and the third layer contain the same polyvinyl acetal resin and the same plasticizer. For the reason of excellent production efficiency of the interlayer film, it is further preferred that the second layer and the third layer be formed of the same resin composition.
It is preferred that the interlayer film have protrusions and recesses on at least one surface of the surfaces of both sides. It is more preferred that the interlayer film have protrusions and recesses on surfaces of both sides. Examples of the method for forming the protrusions and recesses include, but are not particularly limited to, a lip emboss method (melt fracture method), an emboss roll method, a calender roll method, and a profile extrusion method, and the like.

(Laminated glass)

The laminated glass according to the present invention includes a first lamination glass member, a second lamination glass member and the aforementioned interlayer film for laminated glass. In the laminated glass according to the present invention, the above-mentioned interlayer film for laminated glass is arranged between the first lamination glass member and the second lamination glass member.
Fig. 11 is a sectional view schematically showing an example of laminated glass prepared with the interlayer film for laminated glass shown in Fig. 1.
A laminated glass 21 shown in Fig. 11 includes a first lamination glass member 22, a second lamination glass member 23 and the interlayer film 11. The interlayer film 11 is arranged between the first lamination glass member 22 and the second lamination glass member 23 to be sandwiched therebetween.
The laminated glass is, for example, a head-up display. When the laminated glass is a head-up display, the laminated glass has a display region of the head-up display. The display region is a region capable of favorably displaying information.
It is preferred that the laminated glass serve as a head-up display (HUD).
A head-up display system can be obtained by using the aforementioned head-up display. The head-up display system includes the laminated glass, and a light source device for irradiating the laminated glass with light for image display. The light source device can be attached, for example, to a dashboard in a vehicle. By irradiating the display region of the laminated glass with light from the light source device, it is possible to achieve image display.
It is preferred that the first lamination glass member be the first glass plate. It is preferred that the second lamination glass member be the second glass plate.
Examples of the first and second lamination glass members include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate including a glass plate, and it is preferred that at least one glass plate be used. It is preferred that each of the first lamination glass member and the second lamination glass member be a glass plate or a PET film, and the laminated glass include a glass plate as at least one of the first lamination glass member and the second lamination glass member. It is especially preferred that both of the first and second lamination glass members be glass plates.
Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, green glass, and the like. The organic glass is synthetic resin glass substituted

for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

The thickness of each of the first lamination glass member and the second lamination glass member is preferably 1 mm or more, and is preferably 5 mm or less, more preferably 3 mm or less. Moreover, when the lamination glass member is a glass plate, the thickness of the glass plate is preferably 0.5 mm or more, more preferably 0.7 mm or more, and is preferably 5 mm or less, more preferably 3 mm or less. When the lamination glass member is a PET film, the thickness of the PET film is preferably 0.03 mm or more and is preferably 0.5 mm or less.

The method for producing the laminated glass is not particularly limited. First, the interlayer film is sandwiched between the first lamination glass member and the second lamination glass member to obtain a laminate. Then, for example, by passing the obtained laminate through pressure rolls or subjecting the obtained laminate to decompression suction in a rubber bag, the air remaining between the first and the second lamination glass members and the interlayer film is removed. Then, the laminate is preliminarily bonded together at about 70°C to 110°C to obtain a preliminarily press-bonded laminate. Next, by putting the preliminarily press-bonded laminate into an autoclave or by pressing the laminate, the laminate is press-bonded at about 120°C to 150°C and under a pressure of 1 MPa to 1.5 MPa. In this way, laminated glass can be obtained.

Each of the interlayer film and the laminated glass can be used for automobiles, railway vehicles, aircraft, ships, and buildings and the like. Each of the interlayer film and the laminated glass can also be used for applications other than these applications. It is preferred that the interlayer film and the laminated glass be an interlayer film and laminated glass for vehicles or for buildings respectively, and it is more preferred that the interlayer film and the laminated glass be an interlayer film and laminated glass for vehicles respectively. Each of the interlayer film and the laminated glass can be used for a windshield, side glass, rear glass, roof glass or glass for backlight of an automobile, and the like. The interlayer film and the laminated glass are suitably used for automobiles. The interlayer film is suitably used for obtaining laminated glass for an automobile.

Hereinafter, the present invention will be described in more detail with reference to examples and comparative examples. The present invention is not limited only to these examples.

In polyvinyl acetal resins used, n-butyraldehyde that has 4 carbon atoms is used for the acetalization. With regard to the polyvinyl acetal resin, the acetalization degree (the butyralization degree), the acetylation degree and the content of the hydroxyl group were measured by a method conforming to JIS K6728 "Testing methods for polyvinyl butyral". In this connection, even in the cases of being measured according to ASTM D1396-92, numerical values similar to those obtained by a method conforming to JIS K6728 "Testing methods for polyvinyl butyral" were exhibited.

The following light stabilizer, oxidation inhibitor, and ultraviolet ray screening agent were prepared.

(Light stabilizer)

Hindered amine light stabilizer (N-C (alkyl group) type "Tinuvin 765" available from BASF Japan Ltd., molecular weight 509)

(Oxidation inhibitor)

Phenolic oxidation inhibitor ("IRGANOX 1010" available from BASF Japan Ltd. molecular weight 1178)
Phenolic oxidation inhibitor (2,6-di-t-butyl-p-cresol (BHT), molecular weight 220)

(Ultraviolet ray screening agent)

2-(2'-hydroxy-3'-t-butyl-5-methylphenyl)-5-chlorobenzotriazole ("Tinuvin 326" available from BASF Japan Ltd.)

(Example 1)

Preparation of resin composition for forming first layer:
The following ingredients were mixed, and kneaded sufficiently with a mixing roll to obtain a composition for forming a first layer.

Polyvinyl acetal resin (average polymerization degree: 3000, content of hydroxyl group: 22% by mole, acetylation degree: 13% by mole, acetalization degree: 65% by mole): 100 parts by weight

Triethylene glycol di-2-ethylhexanoate (3GO): 60 parts by weight
Light stabilizer in an amount of 0.025% by weight in the obtained first layer

Oxidation inhibitor in an amount of 0.1% by weight in the obtained first layer
Ultraviolet ray screening agent in an amount of 0.2% by weight in the obtained first layer

Preparation of resin composition for forming second layer and third layer:
The following ingredients were mixed, and kneaded sufficiently with a mixing roll to obtain a resin composition for forming a second layer and a third layer.
Polyvinyl acetal resin (average polymerization degree: 1700, content of hydroxyl group: 30.5% by mole, acetylation degree: 1% by mole, acetalization degree: 68.5% by mole): 100 parts by weight

Triethylene glycol di-2-ethylhexanoate (3GO): 40 parts by weight
An amount that is to be a magnesium content of 60 ppm in the obtained interlayer film of a Mg mixture (50 : 50 (weight ratio) mixture of magnesium 2-ethylbutyrate and magnesium acetate)

Preparation of interlayer film:
By coextruding the resin composition for forming a first layer and the resin composition for forming a second layer and a third layer using a coextruder, an interlayer film (interlayer film having the shape shown in Table 1) having a three-layer structure (second layer/first layer/third layer) was obtained.

(Example 2)

The interlayer film (interlayer film having a shape shown in Table 1) was obtained in the same manner as that in Example 1 except that the kind and the content of the oxidation inhibitor were changed as shown in Table 1.

(Comparative Example 1)

The interlayer film (interlayer film having a shape shown in Table 1) was obtained in the same manner as that in Example 2 except that a light stabilizer was not used.

(Comparative Example 2)

The interlayer film (interlayer film having a shape shown in Table 1) was obtained in the same manner as that in Example 1 except that a light stabilizer was not used.

(Example 3)

The interlayer film was obtained in the same manner as that in Example 1 except that the configuration of the interlayer film was set as shown in Table 2. In Example 3, the same kinds of the ultraviolet ray screening agent as that in Example 1 was mixed in the same mixing amount as that in Example 1.

(Example 4)

The interlayer film (interlayer film having a shape shown in Table 2) was obtained in the same manner as that in Example 3 except that the kind and the content of the oxidation inhibitor were changed as shown in Table 2.

(Comparative Example 3)

The interlayer film (interlayer film having a shape shown in Table 2) was obtained in the same manner as that in Example 4 except that a light stabilizer was not used.

(Comparative Example 4)

The interlayer film (interlayer film having a shape shown in Table 2) was obtained in the same manner as that in Example 3 except that a light stabilizer was not used.

(Example 5)

The interlayer film was obtained in the same manner as that in Example 1 except that the configuration of the interlayer film was set as shown in Table 3. In Example 5, the same kinds of the ultraviolet ray screening agent as that

in Example 1 was mixed in the same mixing amount as that in Example 1.

(Example 6)

The interlayer film (interlayer film having a shape shown in Table 3) was obtained in the same manner as that in Example 5 except that the kind and the content of the oxidation inhibitor were changed as shown in Table 3.

(Comparative Example 5)

The interlayer film (interlayer film having a shape shown in Table 3) was obtained in the same manner as that in Example 6 except that a light stabilizer was not used.

(Comparative Example 6)

The interlayer film (interlayer film having a shape shown in Table 3) was obtained in the same manner as that in Example 5 except that a light stabilizer was not used.

(Reference example A)

The interlayer film in which an increment in thickness from one end to the other end is constant was obtained in the same manner as that in Example 1 except that the configuration of the interlayer film was set as shown in Table 3. In Reference Example A, the same kind of the ultraviolet ray screening agent as that in Example 1 was mixed in the same mixing amount as that in Example 1.

(Evaluation)

(1) Partial wedge angle of interlayer film and wedge angle θ of interlayer film as whole

In the obtained interlayer film, taking the position of 4 cm from the end part of the one end side toward the other end as a start point, and the position of 4 cm from the end part of the other end side toward the one end as an end point, points were selected every 2 mm intervals, and a partial wedge angle was determined in regions of every 80 mm in the direction connecting the one end and the other end, respectively centered at the above points.

Partial wedge angle in each region was measured specifically in the order of the following 1 to 3.

1: Points P are selected every 2 mm intervals starting at the end part of the one end side of the interlayer film and terminating at the end part of the other end side.
2: At each point P, the thickness of the interlayer film is measured.
3: Plotting the distance (unit: mm) from the end part of the one end side of the interlayer film on the x axis, and the thickness (unit: um) of the interlayer film on the y axis, a primary line is obtained by the least-square method. The interior angle formed by the obtained primary line and the line of $y = 0$ is defined as partial wedge angle.

In Tables, the range of obtained partial wedge angles (upper limit and lower limit) are indicated.

Also, in the obtained interlayer film, wedge angle θ of the interlayer film as a whole was determined.

(2) Distance in which gap is generated (foaming test)

The obtained interlayer film was sandwiched between two sheets of clear glass (100 cm long × 150 cm wide × 2.5 mm thick), and vacuum-pressed by retention at 90°C for 30 minutes with a vacuum laminator, to obtain laminated glass.

Fig. 13 is a view for illustrating a method of preparing a test sample for foaming test in a foaming test. As shown in Fig. 13, in an obtained laminated glass 21X, the one end side of the laminated glass 21X was cut out in the condition that the interval between the interlayer film 11X and clear glass 22X, 23X did not change, namely, in a fixed condition not to cause deformation of the clear glass 22X, 23X, and a test sample A for foaming test with a size of 15 m long and 5 cm wide was obtained. Also, the other end side of the laminated glass 21X was cut out in the same manner to obtain a test sample B for foaming test with a size of 15 cm long and 5 cm wide.

Each of the obtained test samples A, B for foaming test was irradiated with an ultraviolet ray with a radiation intensity of 60 W/$m^2$ for 2000 hours at a temperature in the vessel of 50°C from one of surface of clear glass while the

condition not causing deformation of the clear glass was kept (JIS-UV test). The end parts of the test sample A, B for foaming test after light irradiation were observed, and a distance in which a gap was generated (gap distance) was measured on the one end side of the interlayer film (test sample A for foaming test) and on the other end side of the interlayer film (test sample B for foaming test).

By calculating a reduction rate of gap distance represented by the following formula (X) in interlayer films having the same shape, to what degree the distance in which the gap is generated was controlled was evaluated. The reduction rate of gap distance is an index for to what degree the distance in which gap is generated was controlled in a comparison target interlayer film compared with a comparison standard interlayer film in interlayer films having the same shape. Of the test samples A, B for foaming test, the test sample having a longer gap distance was used to calculate the reduction rate of gap distance.

$$\text{Reduction rate of gap distance (\%)} = D_1/D_2 \times 100 \quad (X)$$

$D_1$: gap distance (mm) when comparison target interlayer film is used
$D_2$: gap distance (mm) when comparison standard interlayer film is used

In Examples 1, 2 and Comparative Examples 1, 2 having the same shape, the interlayer films obtained in Examples 1, 2 and Comparative Example 2 were comparison target interlayer films, and the interlayer film obtained in Comparative Example 1 was a comparison standard interlayer film. In Examples 3, 4 and Comparative Examples 3, 4 having the same shape, the interlayer films obtained in Examples 3, 4 and Comparative Example 4 were comparison target interlayer films, and the interlayer film obtained in Comparative Example 3 was a comparison standard interlayer film. In Examples 5, 6 and Comparative Examples 5, 6 having the same shape, the interlayer films obtained in Examples 5, 6 and Comparative Example 6 were comparison target interlayer films, and the interlayer film obtained in Comparative Example 5 was a comparison standard interlayer film.

[Criteria for judgement in distance in which gap is generated (foaming test)]

O: reduction rate of gap distance is less than 50% in both end parts on one end side and other end side
△: reduction rate of gap distance is 50% or more and less than 75% in both end parts on one end side and other end side
×: reduction rate of gap distance is 75% or more in both end parts on one end side and other end side

Configurations of interlayer films and results are shown in the following Tables 1 to 3.

[Table 1]

| | | | Example 1 | Example 2 | Comparative Example 1 | Comparative Example 2 |
|---|---|---|---|---|---|---|
| Configuration of interlayer film | Number of layers | | Three layers | Three layers | Three layers | Three layers |
| | Contour | | Fig. 9 | Fig. 9 | Fig. 9 | Fig. 9 |
| | Thickness of one end | μm | 760 | 760 | 760 | 760 |
| | Thickness of other end | μm | 1100 | 1100 | 1100 | 1100 |
| | Distance between one end and other end | mm | 1000 | 1000 | 1000 | 1000 |
| | Range of partial wedge angle | mrad | 0.46-0.2 | 0.46-0.2 | 0.46-0.2 | 0.46-0.2 |
| | Wedge angle θ of interlayer film as whole | mrad | 0.34 | 0.34 | 0.34 | 0.34 |
| | Kind of light stabilizer | | Tinuvin765 | Tinuvin765 | - | - |
| | Content of light stabilizer in 100% by weight of layer containing light stabilizer (first layer) | % by weight | 0.025 | 0.025 | - | - |
| | Kind of oxidation inhibitor | | IRGANOX 1010 | BHT | BHT | IRGANOX 1010 |
| | Content of oxidation inhibitor in 100% by weight of layer containing oxidation inhibitor (first layer) | % by weight | 0.1 | 0.2 | 0.2 | 0.1 |
| Distance in which gap is generated (foaming test) | Distance | mm | - | - | 4 | - |
| | Judgement | | ○ | △ | - | × |

[Table 2]

| | | | Example 3 | Example 4 | Comparative Example 3 | Comparative Example 4 |
|---|---|---|---|---|---|---|
| Configuration of interlayer film | Number of layers | | Three layers | Three layers | Three layers | Three layers |
| | Contour | | Fig. 4 | Fig. 4 | Fig. 4 | Fig. 4 |
| | Thickness of one end | μm | 760 | 760 | 760 | 760 |
| | Thickness of other end | μm | 1180 | 1180 | 1180 | 1180 |
| | Distance between one end and other end | mm | 1000 | 1000 | 1000 | 1000 |
| | Range of partial wedge angle | mrad | 0.53-0.28 | 0.53-0.28 | 0.53-0.28 | 0.53-0.28 |
| | Wedge angle θ of interlayer film as whole | mrad | 0.42 | 0.42 | 0.42 | 0.42 |
| | Kind of light stabilizer | | Tinuvin765 | Tinuvin765 | - | - |
| | Content of light stabilizer in 100% by weight of layer containing light stabilizer (first layer) | % by weight | 0.025 | 0.025 | - | - |
| | Kind of oxidation inhibitor | | IRGANOX 1010 | BHT | BHT | IRGANOX 1010 |
| | Content of oxidation inhibitor in 100% by weight of layer containing oxidation inhibitor (first layer) | % by weight | 0.1 | 0.2 | 0.2 | 0.1 |
| Distance in which gap is generated (foaming test) | Distance | mm | - | - | 3.5 | - |
| | Judgement | | ○ | △ | - | × |

[Table 3]

| | | | Example 5 | Example 6 | Comparative Example 5 | Comparative Example 6 | Reference example A |
|---|---|---|---|---|---|---|---|
| Configuration of interlayer film | Number of layers | | Three layers | Three layers | Three layers | Three layers | Three layers |
| | Contour | | Fig. 10 | Fig. 10 | Fig. 10 | Fig. 10 | Fig. 12 |
| | Thickness of one end | μm | 760 | 760 | 760 | 760 | 760 |
| | Thickness of other end | μm | 1110 | 1110 | 1110 | 1110 | 1140 |
| | Distance between one end and other end | mm | 1000 | 1000 | 1000 | 1000 | 1000 |
| | Range of partial wedge angle | mrad | 0.6-0.0 | 0.6-0.0 | 0.6-0.0 | 0.6-0.0 | 0.38 |
| | Wedge angle θ of interlayer film as whole | mrad | 0.35 | 0.35 | 0.35 | 0.35 | 0.38 |
| | Kind of light stabilizer | | Tinuvin765 | Tinuvin765 | - | - | Tinuvin765 |
| | Content of light stabilizer in 100% by weight of layer containing light stabilizer (first layer) | % by weight | 0.025 | 0.025 | - | - | 0.025 |
| | Kind of oxidation inhibitor | | IRGANOX 1010 | BHT | BHT | IRGANOX 1010 | IRGANOX 1010 |
| | Content of oxidation inhibitor in 100% by weight of layer containing oxidation inhibitor (first layer) | % by weight | 0.1 | 0.2 | 0.2 | 0.1 | 0.1 |
| Distance in which gap is generated (foaming test) | Distance | mm | - | - | 5.5 | - | 1.5 |
| | Judgement | | ○ | △ | - | × | - |

**EXPLANATION** OF SYMBOLS

1, 1A, 1B, 1C, 1D, 1E, 1F, 1G, 1H, 1I: First layer
2, 2A, 2C, 2D, 2G, 2H, 2I: Second layer
3, 3A, 3C, 3D, 3G, 3H, 3I: Third layer
1Ba, 1Ea, 1Fa: Portion having a rectangular sectional shape in thickness direction
1Bb, 1Eb, 1Fb: Portion having a wedge-like sectional shape in thickness direction
11, 11A, 11B, 11C, 11D, 11E, 11F, 11G, 11H, 11I: Interlayer film
11a: One end
11b: Other end
11Ba, 11Ea, 11Fa, 11Ia: Portion having a rectangular sectional shape in thickness direction
11Bb, 11Eb, 11Fb, 11Ib: Portion having a wedge-like sectional shape in thickness direction
11Ha: First portion where increment of thickness is constant
11Hb: Second portion where increment of thickness is constant
21: Laminated glass
22: First lamination glass member
23: Second lamination glass member

## Claims

1. An interlayer film for laminated glass containing a light stabilizer, and an oxidation inhibitor,

   the interlayer film for laminated glass having one end, and the other end being at an opposite side of the one end and having a larger thickness than the one end, and
   the interlayer film for laminated glass having an increment not constant in thickness from the one end to the other end.

2. The interlayer film for laminated glass according to claim 1, wherein

   the light stabilizer is a hindered amine light stabilizer, and
   the hindered amine light stabilizer is a hindered amine light stabilizer in which a carbon atom or an oxygen atom of an alkoxy group is bonded to a nitrogen atom of a piperidine structure.

3. The interlayer film for laminated glass according to claim 1 or 2, wherein the oxidation inhibitor is a phenolic oxidation inhibitor.

4. The interlayer film for laminated glass according to any one of claims 1 to 3, wherein the oxidation inhibitor has a molecular weight of 220 or more.

5. The interlayer film for laminated glass according to any one of claims 1 to 4, wherein a content of the light stabilizer in 100% by weight of a layer containing the light stabilizer is 0.01% by weight or more and 0.5% by weight or less.

6. The interlayer film for laminated glass according to any one of claims 1 to 5, wherein a content of the oxidation inhibitor in 100% by weight of a layer containing the oxidation inhibitor is 0.1% by weight or more and 2% by weight or less.

7. The interlayer film for laminated glass according to any one of claims 1 to 6, wherein

   the interlayer film has a distribution in a content on a weight basis of the light stabilizer in a direction connecting the one end and the other end such that the content on a weight basis of the light stabilizer is larger on the other end side of the direction connecting the one end and the other end, and
   the interlayer film has a distribution in a content on a weight basis of the oxidation inhibitor in the direction connecting the one end and the other end such that the content on a weight basis of the oxidation inhibitor is larger on the other end side of the direction connecting the one end and the other end.

**8.** The interlayer film for laminated glass according to any one of claims 1 to 7, having at least one of configuration (1) to configuration (3):

configuration (1): the interlayer film has a region where a thickness increases from the one end side to the other end side, and has a portion where an increment in thickness differs from the one end side to the other end side in the region where the thickness increases,
configuration (2): the interlayer film has a portion where a wedge angle differs from the one end side to the other end side in a region having a wedge-like sectional shape in a thickness direction, and
configuration (3): the interlayer film has a portion having a rectangular sectional shape in the thickness direction, and a portion having a wedge-like sectional shape in the thickness direction.

**9.** The interlayer film for laminated glass according to any one of claims 1 to 8, comprising a first layer, and a second layer arranged on a first surface side of the first layer.

**10.** The interlayer film for laminated glass according to claim 9, wherein

the first layer contains a polyvinyl acetal resin and a plasticizer, and
the second layer contains a polyvinyl acetal resin and a plasticizer.

**11.** The interlayer film for laminated glass according to claim 10, wherein a content of hydroxyl group of the polyvinyl acetal resin in the first layer is lower than a content of hydroxyl group of the polyvinyl acetal resin in the second layer.

**12.** The interlayer film for laminated glass according to claim 10 or 11, wherein a content of the plasticizer in the first layer per 100 parts by weight of the polyvinyl acetal resin in the first layer is larger than a content of the plasticizer in the second layer per 100 parts by weight of the polyvinyl acetal resin in the second layer.

**13.** The interlayer film for laminated glass according to any one of claims 9 to 12, wherein the first layer contains the light stabilizer and the oxidation inhibitor.

**14.** A laminated glass comprising:

a first lamination glass member;
a second lamination glass member; and
the interlayer film for laminated glass according to any one of claims 1 to 13,
the interlayer film for laminated glass being arranged between the first lamination glass member and the second lamination glass member.

[FIG. 1.]

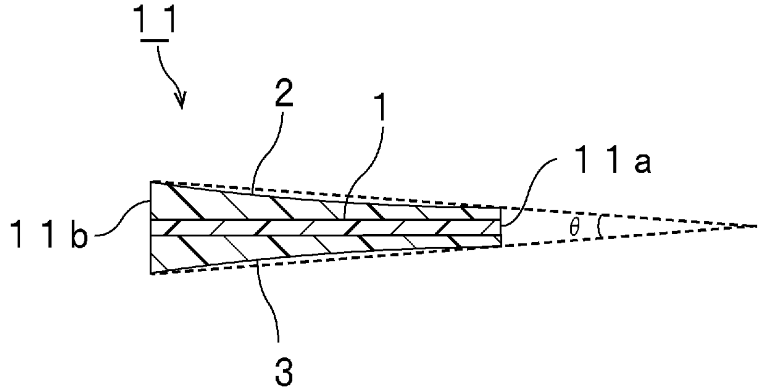


[FIG. 2.]

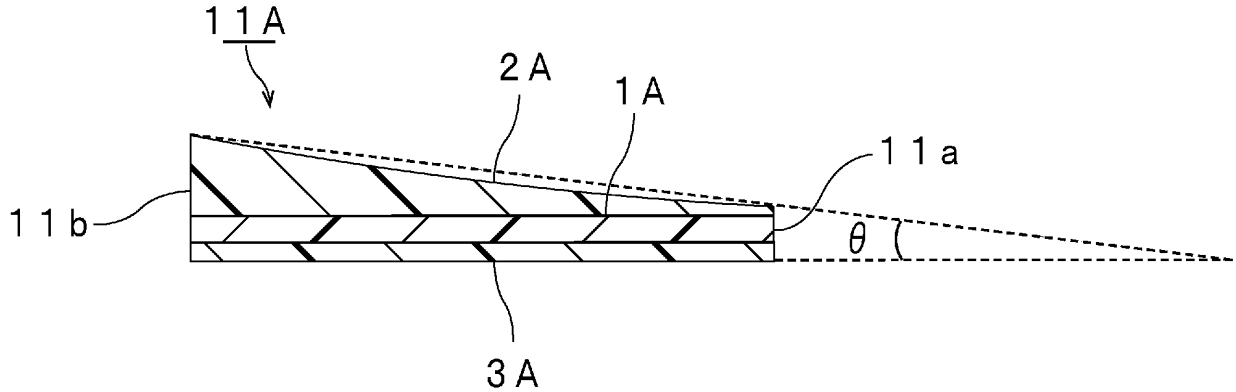


[FIG. 3.]

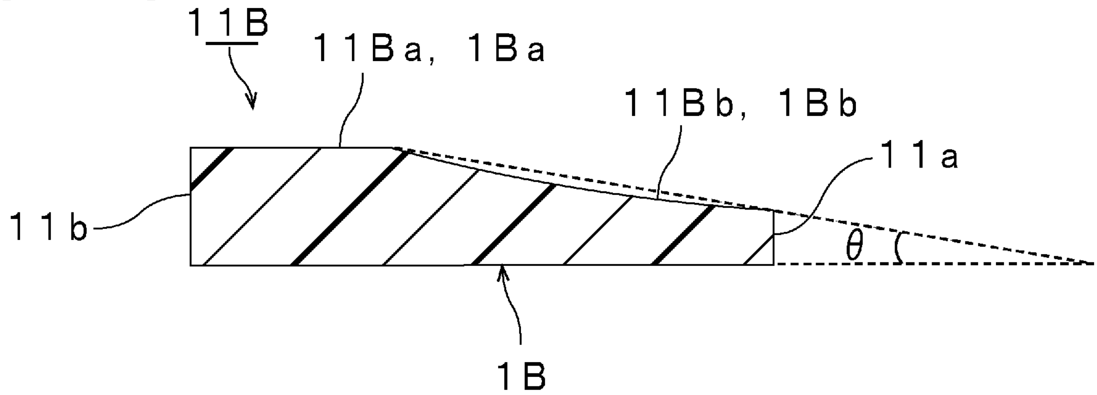

[FIG. 4.]

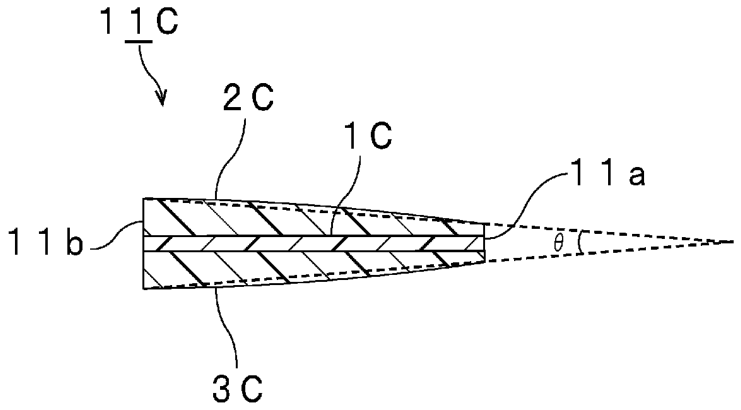


[FIG. 5.]

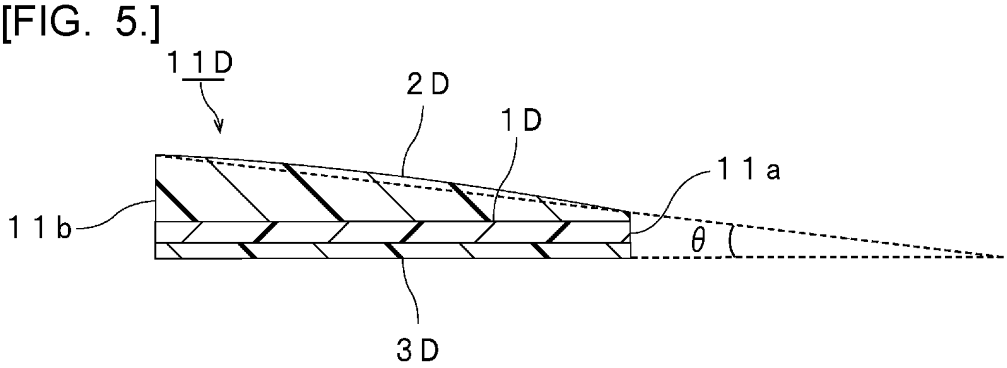


[FIG. 6.]

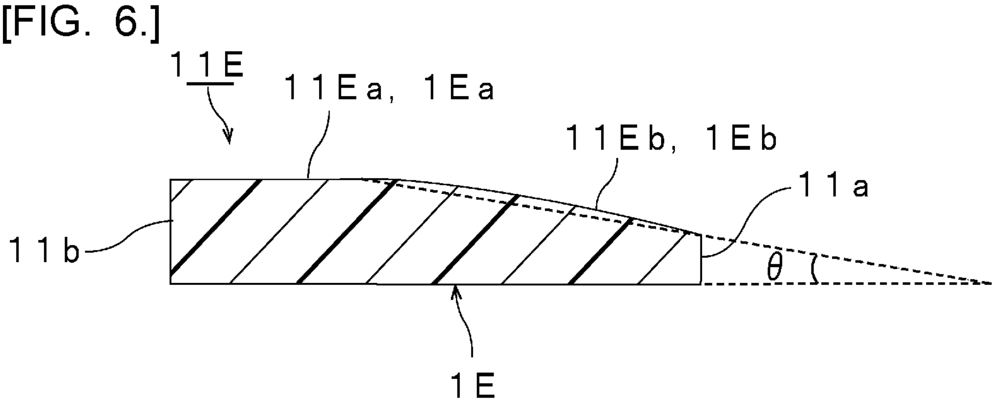


[FIG. 7.]

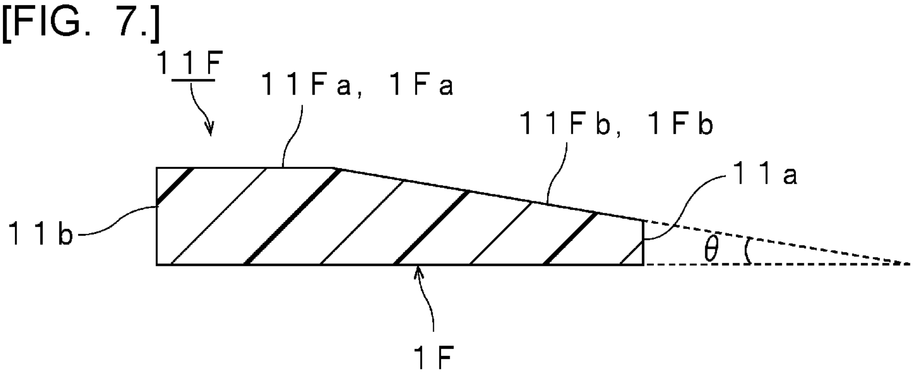

[FIG. 8.]

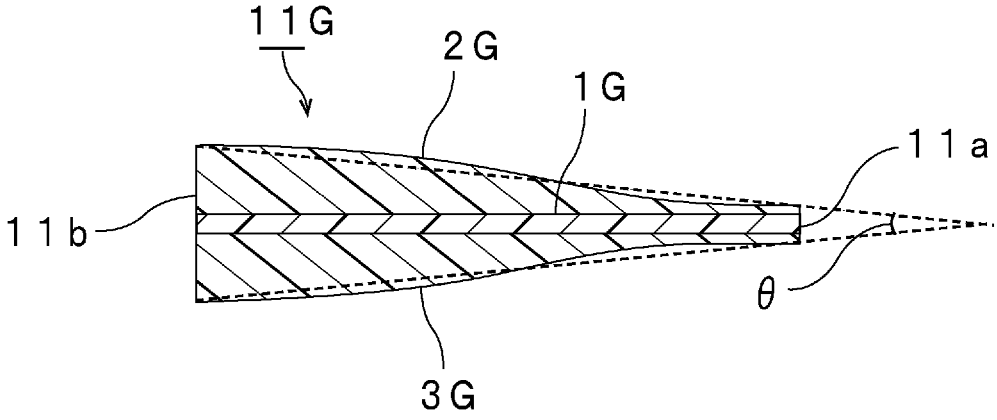


[FIG. 9.]

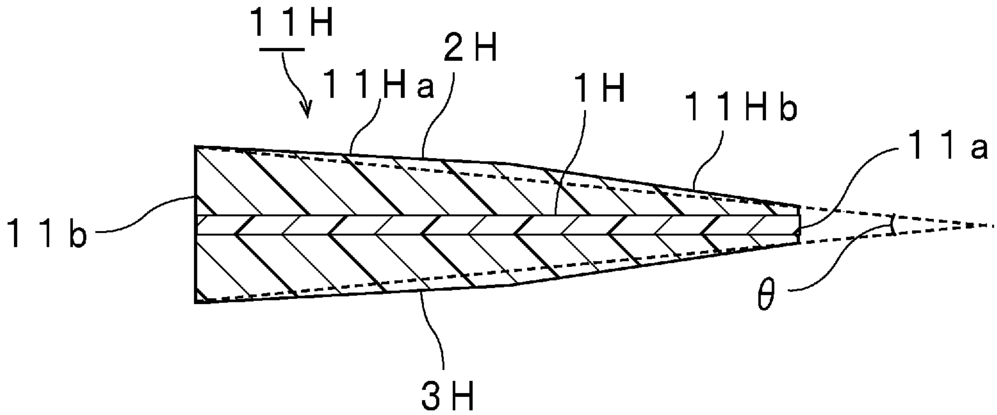


[FIG. 10.]

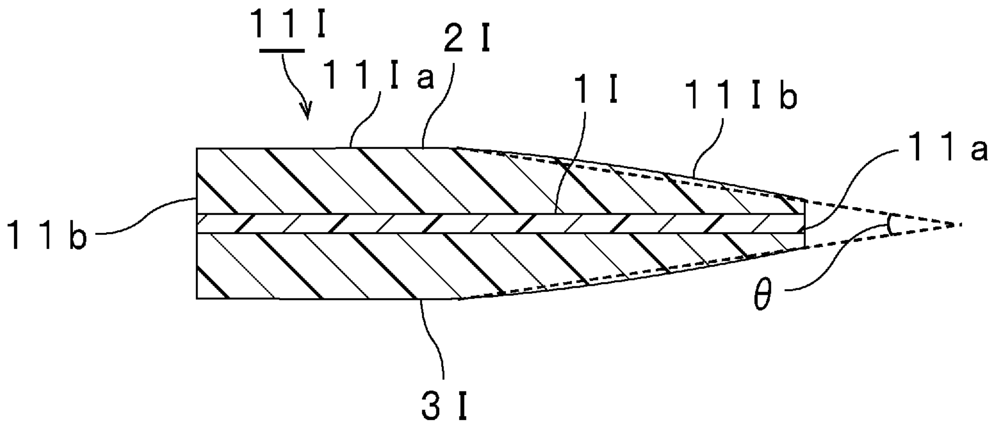

[FIG. 11.]

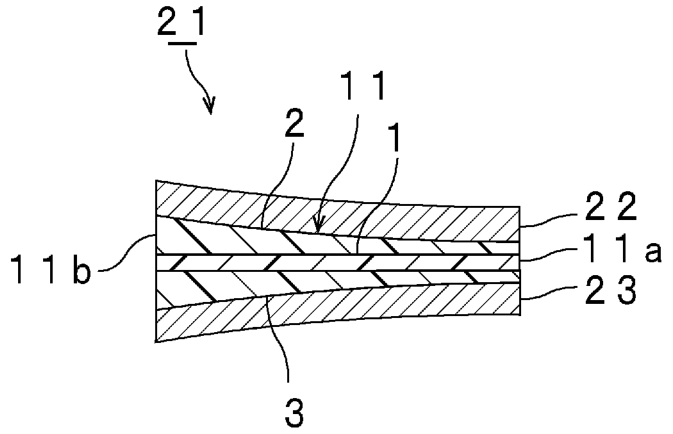


[FIG. 12.]

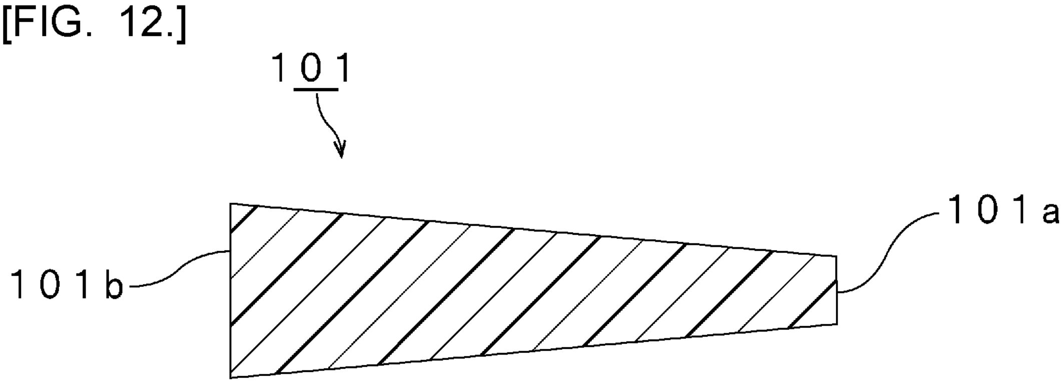


[FIG. 13.]

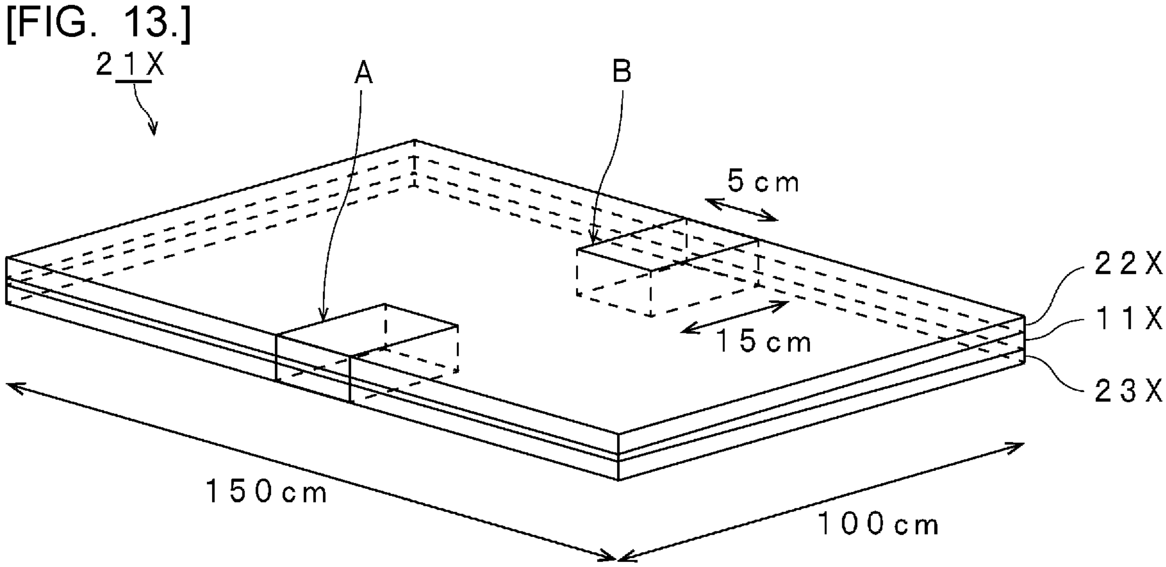

## INTERNATIONAL SEARCH REPORT

International application No. PCT/JP2021/019848

A. CLASSIFICATION OF SUBJECT MATTER
Int.Cl. C03C27/12(2006.01)i, B60J1/00(2006.01)i
FI: C03C27/12Z, C03C27/12D, B60J1/00H

According to International Patent Classification (IPC) or to both national classification and IPC

B. FIELDS SEARCHED

Minimum documentation searched (classification system followed by classification symbols)
Int.Cl. C03C27/12, B60J1/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2019-535620 A (THE KURARAY UNITED STATES INC.) 12 December 2019 (2019-12-12), paragraphs [0001], [0035], [0080], [0092], [0095]-[0098], [0150]-[0168], fig. 4, 6 | 1, 3, 9, 13-14<br>1-14 |
| Y | WO 2018/181418 A1 (SEKISUI CHEMICAL CO., LTD.) 04 October 2018 (2018-10-04), claims, paragraphs [0054]-[0145], [0183]-[0192], fig. 1-7 | 1-14 |
| Y | WO 2017/078160 A1 (SEKISUI CHEMICAL CO., LTD.) 11 May 2017 (2017-05-11), claims, paragraphs [0045]-[0108], [0125]-[0135], fig. 1-9 | 1-14 |
| Y | WO 2018/225795 A1 (SEKISUI CHEMICAL CO., LTD.) 13 December 2018 (2018-12-13), claims, paragraphs [0243]-[0257], [0274] | 1-14 |

☐ Further documents are listed in the continuation of Box C.　☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 July 2021 | 03 August 2021 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.
PCT/JP2021/019848

| | | |
|---|---|---|
| JP 2019-535620 A | 12 December 2019 | WO 2018/081570 A1<br>paragraphs [0001], [0063], [00115], [00127], [00130]-[00133], [00189]-[00207], fig. 4, 6<br>US 2018/0117883 A1<br>KR 10-2019-0065310 A<br>CN 109922958 A |
| WO 2018/181418 A1 | 04 October 2018 | US 2020/0016871 A1<br>claims,<br>paragraphs [0063]-[0153], [0191]-[0200], fig. 1-7<br>EP 3604255 A1<br>CN 109311748 A<br>KR 10-2019-0096797 A |
| WO 2017/078160 A1 | 11 May 2017 | US 2018/0326706 A1<br>claims,<br>paragraphs [0058]-[0122], [0140]-[0153], fig. 1-9<br>EP 3372570 A1 |
| WO 2018/225795 A1 | 13 December 2018 | US 2020/0156353 A1<br>claims,<br>paragraphs [0260]-[0274], [0291]<br>EP 3636614 A1<br>CN 110650930 A<br>KR 10-2020-0016823 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017104632 A1